# EUROPÄISCHE PATENTANMELDUNG

(11) **EP 4 456 414 A1**
(43) Veröffentlichungstag der Anmeldung: **30.10.2024**
(21) Anmeldenummer: 24172246.1
(22) Anmeldetag: 24.04.2024
(51) Int. Cl.: H02S 20/23, F24S 25/33, F24S 25/35, F24S 25/61, F24S 25/65, H02S 40/44

(54) **HYBRIDSOLARMODUL-DACHMONTAGESYSTEM**

(30) Priorität: 24.04.2023 DE 102023110336
(71) Anmelder: Beyersdorffer, Mathias, 29160 Crozon (FR)
(72) Erfinder: Beyersdorffer, Mathias, 29160 Crozon (FR)
(74) Vertreter: Heyerhoff Geiger GmbH & Co. KG

(57) **Zusammenfassung**

Die Erfindung betrifft eine Tragstruktur (10a; 10b) für wenigstens ein Photovoltaikmodul (12). Diese Tragstruktur (10a; 10b) weist mehrere Tragschienen (14) auf. Des Weiteren weist die Tragstruktur (10a; 10b) einen Stützfuß (16) mit einer Grundplatte (18) sowie einer höhenverstellbaren Aufnahmevorrichtung (20) auf, welche auf der Grundplatte (18) angeordnet ist und mittels welcher wenigstens eine der mehreren Tragschienen (14) aufnehmbar ist.

## Beschreibung

Die Erfindung betrifft eine Tragstruktur sowie eine Tragschiene der Tragstruktur, einen Stützfuß der Tragstruktur und eine Positioniervorrichtung der Tragstruktur. Des Weiteren betrifft die Erfindung ein Tragstrukturmodul und ein Montageverfahren.

Photovoltaikmodule können als wasserableitende Schicht einer Dachkonstruktion vorgesehen werden. Zu diesem Zweck bedarf es allerdings einer präzisen Anordnung der Photovoltaikmodule relativ zueinander. Hierzu sind hohe Anforderungen an Form-, Maß- und Lagetoleranzen zu erfüllen. Eine gängige Dachkonstruktion kann jedoch nicht auf eine wirtschaftliche Weise in der für eine präzise Anordnung der Photovoltaikmodule erforderlichen Genauigkeit erstellt werden. Beispielsweise können verwundene oder sich während eine Montage verdrehende Sparren zu unvorhersehbaren Ungenauigkeiten innerhalb der besagten Dachkonstruktion führen. Um dennoch eine möglichst präzise Anordnung der Photovoltaikmodule zu ermöglichen, werden heute üblicherweise Unterlegteile vorgesehen, welche zwischen der Dachkonstruktion und den Photovoltaikmodulen eingebracht werden. Bei solchen Unterlegteilen kann es sich beispielsweise um Holzstücke verschiedener Stärke oder Formen handeln. Diese Art Unterlegteile werden mithin als "Schiftholzunterlage" bezeichnet.

Zudem erfordert eine Montage von Photovoltaikmodulen als wasserableitende Schicht in der Regel eine mechanische Verbindung mit einer tragenden Dachkonstruktion. Die zuvor genannte mechanische Verbindung erfolgt üblicherweise mithilfe von Befestigungsmitteln, wie beispielsweise Schrauben und/oder Dübel oder Nägel. Daher geht die mechanische Verbindung mit einer Durchdringung einer Abdichtung einher. Dadurch besteht die Gefahr von Wassereintritt. Dieser kann zu einer Beschädigung der tragenden Dachkonstruktion und damit zu einer erheblichen Sicherheitsgefahr führen. Daher sind umfangreiche technische Vorgaben im Hinblick auf eine wirksame Abdichtung in diesem Zusammenhang zu beachten. Sind Photovoltaikmodulen als wasserableitende Schicht vorgesehenen, wird zum Zwecke einer wirksamen Abdichtung bislang ein erheblicher Zusatzaufwand in Kauf genommen. Insbesondere werden zusätzliche Dichtungsebenen, wie beispielsweise Unterdeckbahnen, Nageldichtungen, Klebstoffe und schweißbare Bahnen vorgesehen.

Des Weiteren kann die präzise Anordnung der Photovoltaikmodule zu einer wasserableitenden Dacheindeckung zu einer Verringerung eines Wirkungsgrads dieser Photovoltaikmodule führen. Ursache hierfür ist ein Wärmestau unter den Photovoltaikmodulen. Dieser entsteht aufgrund eines erschwerten Abtransports von thermischer Energie, welche infolge der Sonneneinstrahlung auf die besagten Photovoltaikmodulen entsteht. Zum Zwecke einer Vermeidung einer thermisch bedingten Verringerung des Wirkungsgrads bei einer Umwandlung von einer elektro-magnetischen Emissionsenergie der Sonne in eine elektrische Energie ist es bekannt, eine Wärmeübertrageranordnung zum Zwecke eines Abtransports der entstehenden thermischen Energie vorzusehen. Um jedoch einen effizienten und gleichmäßigen Abtransport der thermischen Energie bereitstellen zu können, bedarf es einer möglichst ebenen Kontaktfläche zwischen einem zu kühlenden Photovoltaikmodul und der Wärmeübertrageranordnung. Zum Zwecke einer Erstellung einer solchen möglichst ebenen Kontaktfläche ist bereits ein Dachmontagesystem aus dem Dokument DE 20 2016 100 046 U1 bekannt. Dieses Dachmontagesystem ermöglicht es, eine ebene Aufnahmefläche für Photovoltaikmodule auf einer konventionellen Schrägdachkonstruktion mittels einer Wärmeübertrageranordnung zu erstellen. Eine solche kombinierte Anordnung eines Photovoltaikmoduls auf einer Wärmeübertrageranordnung wird mithin als Hybridsolarmodul bezeichnet.

Aufgabe der vorliegenden Erfindung ist es, eine präzise Anordnung von Photovoltaikmodulen auf eine komfortable und aufwandsgünstige Weise zu ermöglichen.

Diese Aufgabe wird gelöst durch eine Tragstruktur mit den Merkmalen des unabhängigen Anspruchs 1. Des Weiteren wird diese Aufgabe gelöst durch ein Montageverfahren mit den Merkmalen des nebengeordneten Verfahrensanspruchs.

Ferner ist es Aufgabe der Erfindung, eine Tragschiene, einen Stützfuß, eine Positioniervorrichtung sowie ein Tragstrukturmodul anzugeben.

Diese Aufgaben werden gelöst durch eine Tragschiene, durch einen Stützfuß, durch eine Positioniervorrichtung sowie durch ein Tragstrukturmodul gemäß den Merkmalen der entsprechenden nebengeordneten gegenständlichen Ansprüche.

Weitere vorteilhafte Weiterbildungen sind jeweils Gegenstand abhängiger Unteransprüche.

Die erfindungsgemäße Tragstruktur weist mehrere Tragschienen auf. Des Weiteren weist die erfindungsgemäße Tragstruktur einen Stützfuß mit einer Grundplatte sowie einer höhenverstellbaren Aufnahmevorrichtung auf. Die höhenverstellbare Aufnahmevorrichtung ist auf der Grundplatte des Stützfußes angeordnet. Mittels der höhenverstellbaren Aufnahmevorrichtung ist wenigstens eine der mehreren Tragschienen aufnehmbar. Vorzugsweise ist mittels der höhenverstellbaren Aufnahmevorrichtung wenigstens eine der mehreren Tragschienen aufgenommen.

Die höhenverstellbare Aufnahmevorrichtung des Stützfußes ermöglicht es, Unebenheiten eines Untergrunds auszugleichen. Mithilfe der höhenverstellbaren Aufnahmevorrichtung können die Tragschienen daher einfach und aufwandsgünstig relativ zueinander ausgerichtet werden. Dies ermöglicht es, die Tragschienen sowie eine darauf wirkende Last gleichmäßig auf einem Untergrund abzustützen. Als Untergrund kann dabei eine Schrägdachkonstruktion, eine Flachdachkonstruktion oder ein aufgehendes Bauteil, wie beispielsweise eine Fassade, vorgesehen sein. Dies ermöglicht eine vielfältige Anwendungsmöglichkeit der Tragstruktur.

In einer bevorzugten Ausführungsvariante sind mittels der höhenverstellbaren Aufnahmevorrichtung eines Stützfußes zwei Tragschienen auf dem Untergrund abstützbar. In einer ersten Ausführungsform sind zwei Tragschienen unmittelbar durch die höhenverstellbare Aufnahmevorrichtung des einen Stützfußes aufnehmbar. In einer weiteren Ausführungsform sind die zwei Tragschienen miteinander verbunden und eine der zwei Tragschienen ist unmittelbar durch die höhenverstellbare Aufnahmevorrichtung des einen Stützfußes aufgenommen. Dadurch kann eine Anzahl an erforderlichen Stützfüßen klein gehalten werden. Des Weiteren kann auf diese Weise eine relative Anordnung zweier unmittelbar benachbarter Tragschienen vereinfacht werden. Der Stützfuß ermöglicht es, auf eine zeitaufwändige Auswahl sowie Anbringung von Unterlegteilen zum Zwecke einer Ausrichtung von Photovoltaikmodulen oder von einer diese Photovoltaikmodule tragenden Struktur auf einer unebenen Dachkonstruktion zu verzichten.

Vorzugsweise weist die Grundplatte des Stützfußes eine polygonale Grundform auf, wie beispielsweise ein Sechseck oder ein Fünfeck oder ein Dreieck. Insbesondere ist die Grundplatte wabenförmig ausgebildet. Unter geeigneter Ausrichtung der polygonalen Grundplatte kann ein Umleiten von ablaufendem Wasser um die Grundplatte herum begünstigt werden. So kann auf einfache Weise Wasser von Durchdringungsstellen, welche beispielsweise durch eine mechanische Befestigung des Stützfußes auf einem Untergrund bedingt sind, ferngehalten werden.

Ferner kann der Stützfuß eine Befestigungsvorrichtung aufweisen, mittels welcher der Stützfuß mit dem Untergrund verbindbar ist. Die Tragstruktur kann auf diese Weise gegen ein Abheben oder ein Verschieben gesichert werden. Zudem kann die Tragstruktur auf diese Weise einfach an einem aufgehenden Bauteil angeordnet werden. Vorzugsweise sind die höhenverstellbare Aufnahmevorrichtung und die Befestigungsvorrichtung getrennt voneinander ausgebildet. Besonders bevorzugt sind die höhenverstellbare Aufnahmevorrichtung sowie die Befestigungsvorrichtung separat voneinander auf der Grundplatte angeordnet. Dies ermöglicht es, dass der Stützfuß zum Zwecke einer höhenverstellbaren Aufnahme einer Tragschiene nicht zwingend mit einem Untergrund verbunden werden muss. Der Stützfuß kann daher einfach auf einem Untergrund aufgesetzt werden. Dennoch kann dabei eine höhenverstellbaren Aufnahme der Tragschiene realisiert werden. Auf diese Weise kann die Tragstruktur auf verschiedenartigen Untergründen zuverlässig abgestützt werden.

Zweckmäßigerweise sind als die Befestigungsvorrichtung Ausnehmungen in der Grundplatte vorgesehen, in welchen Befestigungsmittel zum Zwecke einer Verbindung des Stützfußes mit dem Untergrund anordenbar sind. Bei dem Befestigungsmittel kann es sich beispielhaft um einen Nagel oder einen Dübel und/oder eine Schraube handeln. Alternativ oder zusätzlich ist denkbar, dass als Befestigungsvorrichtung ein dem Fachmann bekannter Flachdachanker vorgesehen ist. Ein solcher Flachdachanker kann mittelbar oder unmittelbar mit dem Stützfuß verbunden sein. Beispielhaft kann der Flachdachanker mittelbar durch die Tragschiene mit dem Stützfuß verbunden sein.

Bevorzugt weist der Stützfuß eine Abdichtvorrichtung auf, mittels welcher eine Verbindung des Stützfußes mit dem Untergrund abdichtbar ist. Dies ermöglicht es, Schäden durch in den Untergrund eindringendes Wasser zu verhindern. Des Weiteren kann auf diese Weise eine in den Stützfuß integrierte Abdichtungsmöglichkeit geschaffen werden. Auf einen umfangreichen Zusatzaufwand zur Erstellung zusätzlicher Dichtungsebenen kann daher verzichtet werden. Auf diese Weise kann mittels der Tragstruktur eine zuverlässige und sichere wasserableitende Schicht eines Daches gebildet werden. Eine mit Photovoltaikmodulen belegte Tragstruktur kann dadurch eine wasserableitende Dacheindeckung teilweise oder ganz ersetzen oder diese zumindest ergänzen. Ferner kann auf diese Weise einem Wassereintritt aufgrund von Starkregenereignissen oder Starkwind vorgebeugt werden. Im Falle einer Kombination aus Photovoltaikmodulen und Solarthermie, wie dies beispielsweise in dem Dokument DE 20 2016 100 046 U1 unter der Bezeichnung "Hybridsolarmodul" beschrieben ist, kann zudem aufgrund einer Unterschreitung eines Taupunkts Kondenswasser sowie Eis gebildet werden. Mittels der Abdichtvorrichtung kann verhindert werden, dass Kondenswasser in den darunter liegenden Untergrund, wie beispielsweise eine Dachkonstruktion, eintritt.

In einer vorteilhaften Ausführungsvariante weist die Abdichtvorrichtung eine Materialschicht erster Art auf, welche an einer Unterseite der Grundplatte angeordnet ist. Im bevorzugten Anwendungsfall kann diese Materialschicht erster Art eine bislang zusätzlich vorgesehene Dichtungsebene ersetzen. Zweckmäßigerweise liegt die Materialschicht erster Art vollflächig auf der Unterseite der Grundplatte an. Auf diese Weise kann eine zuverlässig abdichtende Wirkung erzielt werden. Des Weiteren kann dadurch ein Montageaufwand erheblich reduziert werden. Zudem kann diese Materialschicht erster Art bereits mit geringem Aufwand vormontiert bereitgestellt werden. Damit kann während einer Endmontage auf die Erstellung einer zusätzlichen Konstruktionsebene zum Zwecke einer Abdichtung verzichtet werden. Daher kann sowohl ein Materialaufwand als auch ein Arbeitsaufwand erheblich verringert werden.

Vorzugsweise sind mittels der Materialschicht erster Art Durchdringungsstellen eines Befestigungsmittels, wie beispielsweise einer Schraube oder eines Nagels, abdichtbar. Insbesondere handelt es sich bei der Materialschicht erster Art um eine Gummischicht, eine geschlossenporige Schaumstoffschicht und/oder um ein Nageldichtband. Alternativ oder zusätzlich kann es sich bei der Materialschicht erster Art um Flüssigkunststoff oder ein schweißbares Bitumen- oder Kunststoffmaterial handeln. Auf diese Weise können zuverlässig und einfach Durchdringungsstellen in einer Abdichtung eines Flachdachs abgedichtet werden.

Eine weitere vorteilhafte Ausführungsvariante sieht vor, dass die Abdichtvorrichtung eine Materialschicht zweiter Art aufweist, mittels welcher die Befestigungsvorrichtung überdeckbar ist. Vorzugsweise ist diese Materialschicht zweiter Art durch wenigstens einen Teil der höhenverstellbaren Aufnahmevorrichtung aufgenommen. Die Materialschicht zweiter Art ermöglicht es, eindringendes Wasser von der Befestigungsvorrichtung fernzuhalten. Dadurch kann aufwandsgünstig und kostengünstig eine redundante Abdichtungsmöglichkeit geschaffen werden. Bevorzugterweise überdeckt die Materialschicht zweiter Art eine Oberseite der Grundplatte vollständig. Besonders bevorzugt überlappt die Materialschicht zweiter Art die Oberseite der Grundplatte. Die Befestigungsvorrichtung kann dadurch einfach vor von oben eintretendem Wasser geschützt werden. Zweckmäßigerweise ist die Materialschicht zweiter Art einseitig mit der Grundplatte und/oder dem Untergrund stoffschlüssig verbindbar. Insbesondere weist die Materialschicht zweiter Art zu diesem Zwecke eine Klebeanordnung auf. Vorzugsweise ist die Materialschicht zweiter Art mit dem Untergrund, wie beispielsweise einer Dachbahn, verklebbar oder verschweißbar. Als Materialschicht zweiter Art können daher auf einfache Weise mit dem Untergrund kompatible Materialien vorgesehen werden. Dies ermöglicht es, Herstellervorgaben im Hinblick auf ein Abdichtsystem mit aufeinander abgestimmten Komponenten zu erfüllen. Solche, mit den Herstellervorgaben kompatible oder vom Hersteller eines Abdichtsystems zugelassene Materialien können daher bedarfsgerecht eingesetzt und verwendet werden. Dadurch kann eine einfach an verschiedene Vorgaben oder Bedürfnisse anpassbare Tragstruktur bereitgestellt werden.

Eine andere vorteilhafte Ausführungsvariante sieht vor, dass die Abdichtvorrichtung zumindest einen Dichtring aufweist, mittels welchem ein in der Befestigungsvorrichtung anordenbares Befestigungsmittel entlang zumindest eines Abschnitts des Befestigungsmittels umschließbar ist. Ein Eindringen von Wasser in den sich unter dem Stützfuß befindlichen Untergrund durch die Befestigungsvorrichtung hindurch kann auf diese Weise erschwert werden. Des Weiteren kann mittels Dichtungsringen eine kostengünstige und komfortabel handhabbare Abdichtungsmöglichkeit bereitgestellt werden. Bevorzugterweise ist der genannte Dichtring Teil einer Spenglerschraube, welche auch als "Dachdeckerschraube" bezeichnet wird.

Eine vorteilhafte Weiterbildung sieht vor, dass als Tragschiene ein Profilstab vorgesehen ist, dessen Profil einen ersten Steg aufweist.

Unter einem Profilstab soll im vorliegenden Zusammenhang ein Stab verstanden werden, welcher sich entlang einer Längsrichtung erstreckt und entlang dieser Längsrichtung, betrachtet in einer sich im Wesentlichen senkrecht zu dieser Längsrichtung erstreckenden Querschnittsebene, ein vorbestimmtes geometrisches Profil aufweist. Zweckmäßigerweise handelt es sich bei dem Profilstab um ein Metallprofilstab oder ein Kunststoffprofilstab. Beispielsweise kann der Profilstab ein Stranggussprofil oder ein mittels Extrusion hergestellter Kunststoffprofilstab sein. Bevorzugt handelt es sich bei dem Profilstab um ein Stranggussprofil aus Aluminium. Auf diese Weise kann eine leichte und korrosionsbeständige Tragstruktur bereitgestellt werden.

Vorzugsweise weist der erste Steg der als Profilstab vorgesehenen Tragschiene eine Oberkante auf, welche relativ zu einer Längserstreckungsrichtung der Tragschiene einen abgewinkelten Verlauf aufweist. Auf diese Weise kann auf eine vorbestimmte Weise eine Höhe entlang zumindest eines Abschnitts eines Verlaufs der Tragschiene in der Längserstreckungsrichtung reduziert ausgebildet sein. Dabei kann der abgewinkelte Verlauf stetig oder unstetig entlang des genannten Verlaufs der Tragschiene ausgebildet sein. Die Begriffe stetig oder unstetig sind dabei im mathematischen Sinne zu verstehen. Bevorzugterweise sind entlang der Oberkante des ersten Stegs Halteausnehmungen der in dem Dokument DE 20 2016 100 046 U1 beschrieben Art vorgesehen.

Der abgewinkelte Verlauf der Oberkante des ersten Stegs ermöglicht es, in einer Höhe relativ zueinander versetzte Ebenen zum Zwecke einer Aufnahme von sich in Längserstreckungsrichtung der Tragschienen überlappenden Photovoltaikmodule vorzusehen. Dies hat sich insbesondere im Falle einer Verwendung von rahmenlosen Photovoltaikmodulen, wie Photovoltaik Laminaten, bewährt. Mithilfe des abgewinkelten Verlaufs kann unter Einhaltung einer hohen Maßgenauigkeit ein vordefinierter Abstand zwischen den sich überlappenden Photovoltaikmodulen realisiert werden. Ferner kann dadurch ein stets gleicher Abstand zwischen sich überlappenden Photovoltaikmodulen vorgesehen werden.

Die Tragstruktur ermöglicht es ferner, eine Aufstiegshilfe für Montagearbeiter bereitzustellen. Beispielhaft kann es sich bei einer solchen Aufstiegshilfe um ein Konstruktionsmaterial, wie ein Holzbrett oder eine Holzlatte, oder um eine gesondert zum Zwecke des Aufstiegs gebildete Leiteranordnung handeln. Die genannten Holzbretter oder Holzlatten können auf eine einfache Weise als Aufstiegshilfe unter die Tragschienen eingeschoben werden und an den Stützfüßen angelegt werde. Eine Durchdringung von Abdichtmaterialien zum Zwecke einer Befestigung der Aufstiegshilfe kann dadurch einfach vermieden werden. Des Weiteren kann auf diese Weise eine sichere und einfach handhabbare Aufstiegshilfe bereitgestellt werden, welche durch die Tragstruktur auf dem Untergrund abgestützt wird.

Bevorzugt sind alle der mehreren Tragschienen der Tragstruktur jeweils durch einen Profilstab gebildet.

In einer vorteilhaften Ausführungsvariante weist die als Profilstab vorgesehene Tragschiene einen zweiten und einen dritten Steg auf. Diese kreuzen jeweils den ersten Steg. Vorzugsweise kreuzt der zweite Steg den ersten Steg im Wesentlichen senkrecht. Ferner kreuzt der dritte Steg den ersten Steg bevorzugterweise im Wesentlichen senkrecht. Des Weiteren sind der zweite Steg und der dritte Steg zweckmäßigerweise voneinander beabstandet angeordnet. Auf diese Weise können kompakte und leichte Tragschienen bereitgestellt werden. Des Weiteren ermöglicht dieses Profil eine hohe Stabilität. Eine auf die Tragschienen wirkende Last kann daher mittels wenigen Stützfü-ßen auf einem Untergrund abgestützt werden. Zudem kann mittels dieses Profils ein Verbiegen der Tragschienen unter Last klein gehalten werden.

In einer besonders vorteilhaften Ausführungsvariante ist eine Breite des zweiten Stegs, gemessen entlang einer Richtung im Wesentlichen senkrecht zu der Längserstreckungsrichtung der Tragschiene, größer als eine Breite des dritten Stegs. Dies ermöglicht es, eine bauraumsparende Tragschiene bereitzustellen.

Vorteilhafterweise weist der zweite Steg an wenigstens einem freien Ende einen abgewinkelten Fortsatz auf. Besonders bevorzugt weist der zweite Steg an beiden seiner freien Enden jeweils einen abgewinkelten Fortsatz auf. Mittels des abgewinkelten Fortsatzes kann eine Stabilität der Tragschiene weiter erhöht werden. Dadurch kann eine hohe Tragfähigkeit der Tragstruktur bei gleichzeitig hoher Formstabilität bereitgestellt werden. Zudem kann auf diese Weise eine Möglichkeit zum Zwecke eines sicheren Ablegens von Leitungen, wie beispielsweise elektrischen Verbindungsleitungen, geschaffen werden. Vorzugsweise ist zum Zwecke einer Sicherung und/oder eines Schutzes solcher abgelegter Leitungen ein Klemmteil vorgesehen. Dieses ist bevorzugt zwischen dem zweiten Steg und dem dritten Steg angeordnet.

Zweckmäßigerweise ist der zweite Steg von der höhenverstellbaren Aufnahmevorrichtung aufgenommen. Beispielsweise weist der zweite Steg zu diesem Zweck zwei Öffnungen zur Durchführung wenigstens eines Teils der höhenverstellbaren Aufnahmevorrichtung auf. Dies ermöglicht eine zuverlässige und stabile Verbindung zwischen dem Stützfuß und der Tragschiene.

In einer vorteilhaften Ausgestaltungsvariante des dritten Stegs weist dieser eine Nut auf, welche entlang der Längserstreckungsrichtung der Tragschiene angeordnet ist. Vorzugsweise ist diese Nut an einer dem zweiten Steg zugewandten Seite des dritten Stegs angeordnet. Besonders bevorzugt sind mehrere solcher Nuten vorgesehen. Dadurch kann eine einfache und zuverlässige Befestigung des vorgenannten Klemmteils bereitgestellt werden. Mithilfe des Klemmteils können die genannten abgelegten Leitungen gegen ein Herausfallen gesichert und/oder gegen Beschädigung geschützt werden. Bevorzugt bildet die genannte Nut einen Teil einer Rastverbindung, mittels welcher das Klemmteil mit der Tragschiene verbindbar ist. Dies ermöglicht eine sichere Anordnung des Klemmteils.

Eine vorteilhafte Weiterbildung sieht zumindest ein Tragstrukturmodul vor. Das zumindest eine Tragstrukturmodul weist mehrere im Wesentlichen parallel zueinander beabstandet angeordnete Tragschienen auf. Des Weiteren weist das zumindest eine Tragstrukturmodul mehrere der Stützfüße auf, in deren höhenverstellbaren Aufnahmevorrichtung jeweils wenigstens eine der mehreren im Wesentlichen parallel zueinander beabstandet angeordneten Tragschienen aufgenommen sind. Mithilfe der Tragstrukturmodule kann eine modulare Bauweise ermöglicht werden. Dadurch kann eine Montage erheblich vereinfacht werden. Des Weiteren kann auf diese Weise die Montage beschleunigt werden. Beispielsweise können das zumindest eine Tragstrukturmodul vormontiert werden. Eine Endmontage des zumindest einen Tragstrukturmoduls kann daraufhin komfortabel mittels eines Krans erfolgen. Eine Anordnung und eine Ausrichtung einzelner Bestandteile der Tragstruktur auf dem Untergrund kann dadurch vermieden werden. Arbeitsabläufe können daher optimiert und beschleunigt werden.

Eine vorteilhafte Ausführungsvariante sieht vor, dass das zumindest eine Tragstrukturmodul mehrere Querverbindungsschienen aufweist, mittels welchen die mehreren Tragschienen des zumindest einen Tragstrukturmoduls miteinander verbunden sind. Dadurch kann ein einfach handhabbares Verbindungssystem bereitgestellt werden. Des Weiteren kann mittels der Querverbindungsschienen ein stabiles Tragstrukturmodul erstellt werden. Dadurch kann eine hohe Tragkraft sowie ein verwindungssteifes Tragstrukturmodul bereitgestellt werden.

Vorzugsweise bilden die genannten mehreren Querverbindungsschienen eine Aufnahmeebene für das wenigstens eine Photovoltaikmodul. Damit kann eine Aufnahmeebene mit einer hohen Formgenauigkeit geschaffen werden. Dies ermöglicht es, auf einfache Weise eine zuverlässig wasserableitende Dacheindeckung mittels Photovoltaikmodulen zu erstellen. Dies ist besonders vorteilhaft im Falle von Schrägdächern, bei welchen eine wasserableitende Ebene möglichst geschlossen sein soll.

Besonders bevorzugt sind die mehreren Querverbindungsschienen Teil einer Wärmeübertrageranordnung. Auf diese Weise ist eine Kombination aus Photovoltaikmodulen und Solarthermie bereitstellbar. Damit kann ein Flächenbedarf zum Zwecke einer Umwandlung von einer elektro-magnetischen Emissionsenergie der Sonne in elektrische und thermische Energie reduziert werden. Thermische und elektrische Energie können daher auf derselben Fläche gewonnen werden. Zudem kann dadurch auf einfache Weise eine thermisch bedingte Verringerung eines Wirkungsgrads von Photovoltaikelementen verhindert werden. Damit kann eine hohe Energieeffizienz auf einer geringen Fläche bereitgestellt werden. Mithilfe der hohen Formgenauigkeit der Aufnahmeebene im Hinblick auf eine Ebenheit kann zudem ein großflächiger Kontakt zwischen der Wärmeübertrageranordnung und den darauf angeordneten Photovoltaikmodulen ermöglicht werden.

Zweckmäßigerweise ist als zumindest eine der genannten mehreren Querverbindungsschienen ein Profilstab vorgesehen, dessen Längserstreckungsrichtung quer, vorzugsweise im Wesentlichen senkrecht, zu einer Längserstreckungsrichtung der mehreren im Wesentlichen parallel zueinander angeordneten Tragschienen angeordnet ist. Vorzugsweise ist die zumindest eine als Profilstab vorgesehene Querverbindungsschiene durch einen Wärmeübertrager der in dem Dokument DE 20 2016 100 046 U1 unter der Bezeichnung "Wärmetauscher" beschriebenen Art gebildet. Wahlweise kann der genannte Profilstab dabei keinen, einen oder mehrere Fluidkanäle der in dem vorgenannten Dokument beschriebenen Art aufweisen. Insbesondere weist der genannte Profilstab einen Tragfuß mit einer Haltekralle gemäß der in dem vorgenannten Dokument beschriebenen Art auf. Mittels dieses Tragfußes können die vorgenannten mehreren im Wesentlichen parallel zueinander beabstandet angeordneten Tragschienen miteinander verbunden werden. Dabei greift die Haltekralle des Tragfu-ßes beispielhaft in Halteausnehmungen, welche auf die zuvor beschriebene Weise entlang der Oberkante des ersten Stegs des Profils der Tragschiene angeordnet sind. Mittels als Profilstab vorgesehenen Querverbindungsschienen kann eine leichte und stabile Tragstruktur bereitgestellt werden. Besonders bevorzugt sind alle der genannten mehreren Querverbindungsschienen jeweils durch einen Profilstab der im vorhergehenden Zusammenhang mit der Querverbindungsschiene beschriebenen Art gebildet. Dies ermöglicht es, dass Photovoltaikmodule auf einer von den Querverbindungsschienen gebildeten Aufnahmeebene aufgelegt werden können. Auf eine zusätzliche Verbindung mit der Aufnahmeebene kann dabei verzichtet werden. Im Falle starker Temperaturschwankungen ermöglicht dies eine Relativbewegung zwischen der Aufnahmeebene und den Photovoltaikmodulen unter Beibehaltung einer möglichst großen Kontaktfläche. Des Weiteren können mithilfe der Profilstäbe einfach und aufwandsgünstig montierbare Tragstrukturmodule bereitgestellt werden, welche auf eine komfortable Weise form- und maßgenau herstellbar sind.

In einer bevorzugten Ausführungsform sind mehrere Tragstrukturmodule der vorbeschriebenen Art vorgesehen. Um eine Montage der mehreren Tragstrukturmodule zu erleichtern und eine präzise relative Anordnung der Tragstrukturmodule relativ zueinander zu ermöglichen, wird eine Positioniervorrichtung vorgeschlagen. Mittels dieser Positioniervorrichtung ist ein erstes Tragstrukturmodul der mehreren Tragstrukturmodule relativ zu einem weiteren Tragstrukturmodul der mehreren Tragstrukturmodule anordenbar. Auf diese Weise kann ein Montageaufwand verringert werden. Des Weiteren ermöglicht dies, eine Endmontage der Tragstrukturmodule mithilfe eines Krans durchzuführen. Dadurch können bereits vormontierte Module mit geringem Endmontageaufwand unter Einhaltung einer hohen Maß-, Lage- und Formgenauigkeit relativ zueinander auf dem Untergrund angeordnet werden. Dahingegen kann auf ein aufwändiges Anordnen und Ausrichten einzelner Bauteile einer Tragstruktur auf dem Untergrund verzichtet werden. Ein Zeitaufwand zum Zwecke der Montage der Tragstruktur kann dadurch erheblich verringert werden.

Vorzugsweise weist die Positioniervorrichtung eine Vorrichtung erster Art auf. Mittels der Vorrichtung erster Art ist eine Tragschiene eines ersten Tragstrukturmoduls der mehreren Tragstrukturmodule fluchtend mit einer Tragschiene eines weiteren Tragstrukturmoduls der mehreren Tragstrukturmodule anordenbar.

Unter einer fluchtenden Anordnung soll im vorliegenden Zusammenhang eine Anordnung zweier Bauteile entlang einer gemeinsamen Geraden verstanden werden. Zweckmäßigerweise werden zwei Tragschienen fluchtend angeordnet, indem die Längserstreckungsrichtungen dieser zwei Tragschienen entlang einer gemeinsamen Geraden angeordnet sind. Vorzugsweise werden die zwei vorbezeichneten Tragschienen derart fluchtend miteinander angeordnet, dass eine Querschnittsfläche eines Profils einer ersten Tragschiene zweier fluchtend miteinander anzuordnenden Tragschienen kongruent mit zumindest einem Teil einer Querschnittsfläche einer weiteren Tragschiene der zwei fluchtend miteinander anzuordnenden Tragschienen angeordnet ist.

Die Vorrichtung erster Art ermöglicht es daher, Tragstrukturmodule auf eine definierte Weise relativ zueinander anzuordnen. Dadurch kann auf eine einfache Weise eine genaue Anordnung der Tragstrukturmodule relativ zueinander erfolgen. Insbesondere können Tragstrukturmodule auf präzise Weise relativ zueinander in einer durch die Längserstreckungsrichtung der Tragschienen vorgegebenen Richtung versetzt angeordnet werden. Dies ermöglicht es, eine Aufnahmeebene zu schaffen, durch welche Photovoltaikmodule überlappend angeordnet werden können. Mithilfe einer solchen überlappenden Anordnung kann auf einfache Weise eine zuverlässig wasserableitende Dachfläche erstellt werden. Im einzelnen Anwendungsfall kann auf diese Weise eine herkömmliche Dacheindeckung durch eine energieeffiziente Kombination aus Photovoltaikmodulen und Solarthermie ersetzt werden.

Vorzugsweise weist die Vorrichtung erster Art eine gekrümmte Leitfläche zum Zwecke einer fluchtenden Anordnung der Tragschiene des genannten ersten Tragstrukturmoduls mit der Tragschiene des genannten weiteren Tragstrukturmoduls auf. Diese gekrümmte Leitfläche ermöglicht ein einfaches Zusammenführen zweier Tragschienen. In einem bevorzugten Anwendungsfall können seitlich zueinander versetzte Tragschienen in einen miteinander fluchtenden Zustand überführt werden.

Ferner weist die Vorrichtung erster Art vorzugsweise einen Leitabschnitt auf, welcher sich in Richtung eines freien Endes dieser Vorrichtung erster Art hin verjüngt. Auf diese Weise kann ein Höhenversatz zwischen zwei fluchtend miteinander anzuordnenden Tragschienen ausgeglichen werden. Bevorzugterweise verjüngt sich der vorgenannte Leitabschnitt entlang der vorgenannten gekrümmten Leitfläche. Dies ermöglicht es, eine kompakte und bauraumsparend anordenbare Positioniervorrichtung bereitzustellen.

In einer bevorzugten Ausführungsvariante weist die Vorrichtung erster Art einen Justierabschnitt auf, mittels welchem formschlüssig in ein Teil eines Profils einer Tragschiene des ersten Tragstrukturmoduls sowie formschlüssig in ein Teil eines Profils einer Tragschiene des weiteren Tragstrukturmoduls eingreifbar ist. Ein formschlüssiger Eingriff des Justierabschnitts in einen Teil der Profile der fluchtend miteinander anzuordnenden Tragschienen ermöglicht eine exakte Ausrichtung dieser zwei Tragschienen relativ zueinander. Dadurch kann auf ein aufwändiges manuelles Ausrichten der zwei fluchtend miteinander anzuordnenden Tragschienen verzichtet werden. Zudem kann ein Verbinden sowie ein Ausrichten der zwei vorgenannten Tragschienen in einem gemeinsamen Arbeitsschritt vereint werden. Bevorzugterweise ist der Justierabschnitt derart ausgebildet, dass dieser in einem Zwischenraum durch den zweiten Steg und den dritten Steg des vorgenannten Profils der Tragschiene formschlüssig eingreift.

Zweckmäßigerweise folgt der Justierabschnitt unmittelbar auf den Leitabschnitt. Dadurch kann der Justierabschnitt zuverlässig und einfach hin zu dem Profil der Tragschiene geführt werden, in welches der Justierabschnitt eingreifen soll.

Zudem wird vorgeschlagen, dass die Positioniervorrichtung wenigstens eine Rampe aufweist. Vorzugsweise ist diese Rampe mit der vorgenannten Tragschiene des weiteren Tragstrukturmoduls verbunden. Mittels der Rampe ist vorzugsweise eine mit der vorgenannten Tragschiene des ersten Tragstrukturmoduls verbundene Vorrichtung erster Art zum Zwecke eines Eingriffs des Justierabschnitts in das Profil der Tragschiene des weiteren Tragstrukturmoduls hin zu diesem Profil führbar. Dadurch können größere Höhenunterschiede zwischen fluchtend miteinander anzuordnenden Tragschienen auf eine mechanisch vorgegebene Weise überwunden werden. Des Weiteren kann mithilfe der Rampe ein komfortabler Montagevorgang mittels einer Hebevorrichtung, wie einem Kran, ermöglicht werden.

Eine vorteilhafte Ausführungsform sieht vor, dass die Vorrichtung erster Art ein Anschlagteil zum Zwecke eines Anschlages eines Anschlagmittels eine Hebevorrichtung aufweist. Vorzugsweise ist dieses Anschlagteil einteilig mit der Vorrichtung erster Art ausgebildet. Beispielsweise kann es sich bei dem Anschlagteil um einen ausgestanzten und/oder abgebogenen Abschnitt der Vorrichtung erster Art handeln. Alternativ oder zusätzlich kann als Anschlagteil ein die Vorrichtung erster Art durchdringender Bolzen oder eine die Vorrichtung erster Art durchdringende Gewindeschraube vorgesehen sein. Das Anschlagteil ermöglicht eine einfache Handhabung eines Tragstrukturmoduls und bietet zuverlässige und sichere Anschlagpunkte zum Zwecke eines Anhebens und/oder Transportierens mittels einer Hebevorrichtung. Beispielsweise kann als Anschlagteil ein Haken oder eine Öse vorgesehen sein.

In einer weiteren bevorzugten Ausführungsvariante weist die Positioniervorrichtung eine Vorrichtung zweiter Art auf. Mittels der Vorrichtung zweiter Art ist ein erstes Tragstrukturmodul der mehreren Tragstrukturmodule in einem vorbestimmten seitlichen Abstand relativ zu einem anderen Tragstrukturmodul der mehreren Tragstrukturmodule positionierbar.

Unter dem seitlichen Abstand soll im vorliegenden Zusammenhang ein Abstand zwischen zwei in einer Richtung im Wesentlichen senkrecht zu einer Längserstreckungsrichtung von Tragschienen zumindest eines der mehreren Tragstrukturmodule unmittelbar benachbart angeordneten Tragstrukturmodulen oder artgleichen Teilen dieser Tragstrukturmodule verstanden werden. Dabei soll der seitliche Abstand entlang der genannten Richtung gemessen werden.

Mithilfe der Vorrichtung zweiter Art können Tragstrukturmodule derart relativ zueinander angeordnet werden, dass eine zusammenhängende Aufnahmeebene bereitgestellt werden kann. Des Weiteren wird ermöglicht es die Vorrichtung zweiter Art, einheitliche Abstände zwischen auf der Tragstruktur aufgenommenen Photovoltaikmodulen zu realisieren. Dadurch können vordefinierte Spaltmaße geschaffen werden, welche im bevorzugten Anwendungsfall mittels standardisierten Abdeckungsvorrichtungen geschlossen werden können. Zudem können auf diese Weise zum Zwecke einer Leitung eines Kühlmittels vorgesehene Fluidkanäle von Wärmeübertragern unmittelbar benachbart angeordneter Tragstrukturmodule exakt relativ zueinander ausgerichtet werden. Dies vereinfacht eine Verbindung benachbarter Querverbindungsschienen zum Zwecke eines Erstellens einer fluidleitenden Verbindung.

Vorzugsweise ist mittels der Vorrichtung zweiter Art wenigstens eine von mehreren Querverbindungsschienen eines ersten Tragstrukturmoduls der mehreren Tragstrukturmodule fluchtend mit einer von mehreren Querverbindungsschienen eines weiteren Tragstrukturmoduls der mehreren Tragstrukturmodule anordenbar.

Zweckmäßigerweise sind mittels der Vorrichtung zweiter Art Längserstreckungsrichtungen zweier fluchtend miteinander anzuordnenden Querverbindungsschienen entlang eine gemeinsamen Geraden anordenbar.

Bevorzugterweise weist die Vorrichtung zweiter Art wenigstens einen Leitsteg sowie wenigstens ein Aufnahmeteil zum Zwecke einer Aufnahme des wenigstens einen Leitstegs auf. Die genannte Kombination wenigstens eines Leitstegs mit wenigstens einem Aufnahmeteil ermöglicht eine einfache Positionierung zweier Tragstrukturmodule nebeneinander. Zudem kann auf diese Weise eine leichte und bauraumsparende Vorrichtung zweiter Art bereitgestellt werden.

Besonders bevorzugt weist das wenigstens eine Aufnahmeteil entlang eines vorbestimmten Abschnitts eine Abkantung auf. Mittels dieser Abkantung ist der wenigstes eine Leitsteg aufnehmbar. Dadurch kann der wenigstens eine Leitsteg verschiebbar in dem wenigstens einen Aufnahmeteil gelagert sein. Zweckmäßigerweise ist dabei eine Länge der Abkantung kleiner als eine Länge des wenigstens einen Leitstegs. In einem bevorzugten Anwendungsfall ermöglicht dies, dass ein Tragstrukturmodul mittels wenigstens eines Leitstegs verschiebbar in wenigstens einem Aufnahmeteil eines weiteren Tragstrukturmoduls gelagert ist. Zweckmäßigerweise kann das Tragstrukturmodul auf diese Weise verschiebbar entlang einer Richtung im Wesentlichen parallel zu einer Längserstreckungsrichtung von Tragschienen des Tragstrukturmoduls gelagert werden. Dies ermöglicht eine komfortable Endmontage, bei welcher ein Tragstrukturmodul mittels einer Hebevorrichtung und mittels der Vorrichtung zweiter Art verschiebbar gelagert hin zu einem Bestimmungsort geführt werden kann.

In einer bevorzugten Ausführungsform ist der wenigstens eine Leitsteg und/oder das wenigstens eine Aufnahmeteil mit zwei Querverbindungsschienen verbunden. Alternativ ist der wenigstens eine Leitsteg und/oder das wenigstens eine Aufnahmeteil mit einem Rohrverbinder der Wärmeübertrageranordnung verbunden. Bei dem genannten Rohrverbinder handelt es sich insbesondere um einen Rohrverbinder der im Dokument

DE 20 2016 100 046 U1 beschriebenen Art. Dadurch kann bei der Vormontage eines Tragstrukturmoduls bereits eine genaue Ausrichtung benachbarter Querverbindungsschienen berücksichtigt werden. Insbesondere kann dadurch eine sichere und zuverlässige Funktion der Wärmeübertrageranordnung bereitgestellt werden. Zudem wird auf diese Weise die Endmontage weiter erleichtert.

Die Erfindung sieht ferner eine Tragschiene der erfindungsgemäßen Tragstruktur vor. Bei dieser Tragschiene handelt es sich insbesondere um eine Tragschiene der vorbeschriebenen Art. Mittels einer solchen Tragschiene kann eine stabile und formgenaue Unterkonstruktion für eine Aufnahmeebene geschaffen werden.

Außerdem wird ein Stützfuß der erfindungsgemäßen Tragstruktur vorgeschlagen. Insbesondere handelt es sich bei diesem Stützfuß um den Stützfuß der vorbeschriebenen Art. Dieser Stützfuß bietet eine flexibel an verschiedene Untergründe anpassbare Abstützungsmöglichkeit. Des Weiteren kann in bevorzugten Anwendungsfällen mittels des Stützfußes auf das Anbringen aufwändiger Konstruktionen zum Zwecke einer Abdichtung verzichtet werden.

Des Weiteren sieht die Erfindung ein Tragstrukturmodul der erfindungsgemäßen Tragstruktur vor. Insbesondere handelt es sich bei dem genannten Tragstrukturmodul um ein Tragstrukturmodul der vorbeschriebenen Art. Dies ermöglicht eine Montage mithilfe einer modularen Bauweise. Tragstrukturmodule können bereits vormontiert werden, um daraufhin komfortabel einer Endmontage zugeführt zu werden. Eine Grobausrichtung der Tragstrukturmodule kann daher komfortabel vorab und/oder mithilfe einfacher Ausrichtwerkzeuge oder Schablonen erstellt werden. Im bevorzugten Anwendungsfall kann die Vormontage bodennah in einer sicheren Umgebung erfolgen. Absicherungsmaßnahmen eines Monteurs können im Falle einer Vormontage daher entfallen.

Zudem sieht die Erfindung eine Positioniervorrichtung der erfindungsgemäßen Tragstruktur vor. Bevorzugterweise handelt es sich bei der Positioniervorrichtung um eine Positioniervorrichtung der vorbeschriebenen Art. Mithilfe der Positioniervorrichtung können mehrere Tragstrukturmodule auf einfache Weise relativ zueinander positioniert werden. Eine Endmontage kann dadurch erheblich erleichtert werden. Insbesondere kann dadurch zum Zwecke der Endmontage auf eine Hebevorrichtung zurückgegriffen werden. Daher kann ein Komfort der Montage erheblich verbessert werden.

Ferner sieht die Erfindung ein Montageverfahren vor, bei welchem ein Tragstrukturmodul der erfindungsgemäßen Tragstruktur vormontiert wird. Das vormontierte Tragstrukturmodul wird daraufhin mithilfe von höhenverstellbaren Aufnahmevorrichtungen an Begebenheiten eines Untergrunds angepasst. Bei der höhenverstellbaren Aufnahmevorrichtung handelt es sich insbesondere um eine höhenverstellbare Aufnahmevorrichtung eines Stützfußes der erfindungsgemäßen Tragstruktur. Auf diese Weise wird das vormontierte Tragstrukturmodul auf diesem Untergrund abgestützt. Bei dem genannten Untergrund handelt es sich insbesondere um einen Untergrund der im Zusammenhang mit der erfindungsgemäßen Tragstruktur bereits beschriebenen Art. Dadurch kann eine einfache und komfortable Endmontage bereitgestellt werden. Zudem können dadurch aufwändige Maßnahmen zum Zwecke einer Ausrichtung von Bestandteilen einer Tragstruktur verringert werden. Des Weiteren kann auf diese Weise eine Aufnahmeebene erstellt werden, welche hohe Anforderungen an eine Ebenheit erfüllt. Dadurch können Photovoltaikmodule auf der Aufnahmeebene aufgelegt werden. Auf eine starre Verbindung der Photovoltaikmodule mit der Aufnahmeebene kann verzichtet werden. Mithilfe der formgenauen Aufnahmeebene kann eine zuverlässige Kontaktfläche zwischen einer Wärmeübertrageranordnung und darauf angeordneter Photovoltaikmodulen zum Zwecke einer Steigerung einer Energieeffizienz und zum Zwecke einer Verhinderung einer Verringerung eines Wirkungsgrads der Photovoltaikmodule bereitgestellt werden.

Eine bevorzugte Weiterbildung des Montageverfahrens sieht vor, dass mehrere der vormontierten Tragstrukturmodule vorgesehen werden. Diese mehreren vormontierten Tragstrukturmodule werden mittels einer Positioniervorrichtung der erfindungsgemäßen Tragstruktur relativ zueinander angeordnet. Dadurch kann ein maschinell unterstütztes und/oder standardisiertes Montageverfahren bereitgestellt werden. Das Montageverfahren kann daher beschleunigt und vereinfacht werden. Standardisierte Arbeitsabläufe können zu einer Steigerung einer Effizienz des Montageverfahrens führen. Dadurch kann ein Kostenanfall und Arbeitszeit eingespart werden.

Vorzugsweise wird mittels einer Vorrichtung erster Art der Positioniervorrichtung eine Tragschiene eines ersten Tragstrukturmoduls der mehreren vormontierten Tragstrukturmodule fluchtend mit einer Tragschiene eines weiteren Tragstrukturmoduls der mehreren vormontierten Tragstrukturmodule angeordnet. Dies ermöglicht es, einen wasserableitenden Abschnitt einer Dachkonstruktion unter Einhaltung hoher Anforderungen an eine Lage- und Maßgenauigkeit zu erstellen. Sich in Längsrichtung von Tragschienen überlappende Photovoltaikmodule können maßgenau relativ zueinander positioniert werden. Eine Gefahr eines Eindringens von Niederschlag unter die wasserableitende Schicht aufgrund von extremen Wetterereignissen, wie Starkregen, Schlagregen oder Starkwind, kann auf diese Weise erheblich verringert werden.

Um mittels vormontierte Tragstrukturmodule einfach und rasch große Aufnahmeebenen zu schaffen, wird vorliegend vorgeschlagen, dass mittels einer Vorrichtung zweiter Art der Positioniervorrichtung das erste Tragstrukturmodul oder das weitere Tragstrukturmodul der mehreren vormontierten Tragstrukturmodule in einem vorbestimmten seitlichen Abstand zu einem anderen Tragstrukturmodul der mehreren vormontierten Tragstrukturmodule angeordnet wird. Dies ermöglicht es, mit geringem Endmontageaufwand komfortabel eine Aufnahmeebene für Photovoltaikmodule zu schaffen. Photovoltaikmodule können auf diese Weise rasch und aufwandsgünstig sowie unter Einhaltung vorbestimmter Spaltmaße nebeneinander in einer Richtung im Wesentlichen senkrecht zu Längserstreckungsrichtungen von Tragschienen der nebeneinander angeordneten, vormontierten Tragstrukturmodule angeordnet werden. Auf diese Weise kann eine effiziente Ausnutzung von begrenzten Flächen erreicht werden. Zudem ermöglicht dies das Erstellen einer möglichst geschlossenen wasserableitenden Fläche. Auf eine herkömmliche Dacheindeckung, wie beispielsweise Dachziegel oder Bitumenbahnen kann zumindest teilweise verzichtet werden oder diese kann auf einfache Weise ersetzt werden. Zudem können auf diese Weise Reparaturen oder Sanierungen von Dächern kosteneffizient und unter einer Generierung von Zusatznutzen eingedeckt werden.

Im Weiteren wird die Erfindung anhand von Figuren näher erläutert. Soweit zweckdienlich, sind hierin gleich wirkende Elemente mit gleichen Bezugszeichen versehen. Die Erfindung ist nicht auf die in den Figuren dargestellten Ausführungsbeispiele beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind alle genannten Merkmale jeweils einzeln und in beliebiger geeigneter Kombination mit dem Montageverfahren sowie den Vorrichtungen gemäß der Erfindung kombinierbar.

Es zeigen:
- Figur 1: ein erstes Ausführungsbeispiel einer erfindungsgemäßen Tragstruktur, welche beispielhaft als erfindungsgemäßes Tragstrukturmodul vorgesehen ist, in einer schematischen Darstellung sowie eine Illustration eines Beispiels des erfindungsgemäßen Montageverfahrens;
- Figur 2: eine weitere schematische Ansicht des in Figur 1 gezeigten ersten Ausführungsbeispiels der als Tragstrukturmodul vorgesehenen erfindungsgemäßen Tragstruktur;
- Figur 3: ein Ausführungsbeispiel eines erfindungsgemäßen Stützfußes der erfindungsgemäßen Tragstruktur in einer schematischen Darstellung;
- Figur 4: eine schematische Darstellung eines Ausführungsbeispiels einer erfindungsgemäßen Tragschiene der erfindungsgemäßen Tragstruktur;
- Figur 5: eine schematische Ansicht eines Profils der in Figur 4 gezeigten Tragschiene in einer sich im Wesentlichen senkrecht zu einer Längserstreckungsrichtung dieser Tragschiene erstreckenden Querschnittsebene;
- Figur 6: ein Ausführungsbeispiel einer Vorrichtung erster Art einer erfindungsgemäßen Positioniervorrichtung in einer schematischen Darstellung;
- Figur 7: eine schematische Darstellung eines Ausführungsbeispiels einer Aufnahmevorrichtung einer Vorrichtung zweiter Art der erfindungsgemäßen Positioniervorrichtung;
- Figur 8: ein Ausführungsbeispiel eines Leitstegs der Vorrichtung zweiter Art, welche dazu eingerichtet ist, in die beispielhaft in Figur 7 gezeigte Aufnahmevorrichtung einzugreifen, in einer schematischen Darstellung;
- Figur 9: eine schematische Darstellung eines zweiten Ausführungsbeispiels einer als Tragstrukturmodul vorgesehenen erfindungsgemäßen Tragstruktur;
- Figur 10: eine weitere Ansicht des in Figur 9 gezeigten zweiten Ausführungsbeispiels der als Tragstrukturmodul vorgesehenen Tragstruktur;
- Figur 11: eine schematische Darstellung eines Ausschnitts mehrerer mittels der erfindungsgemäßen Positioniervorrichtung relativ zueinander angeordneter Tragstrukturmodule, auf welchen jeweils Photovoltaikmodule aufgenommen sind;
- Figur 12: eine schematische Detailansicht eines Abschnitts der beispielhaft in Figur 11 gezeigten Anordnung der erfindungsgemäßen Tragstrukturmodule sowie eine Illustration des Beispiels des Montageverfahrens;
- Figur 13: eine schematische Seitenansicht auf einen Verbindungsbereich von beispielhaft mittels der erfindungsgemäßen Positioniervorrichtung relativ zueinander angeordneter Tragstrukturmodule, welche jeweils mit Photovoltaikmodulen belegt sind;
- Figur 14: eine Illustration des Beispiels des Montageverfahrens als schematisches Ablaufdiagramm.

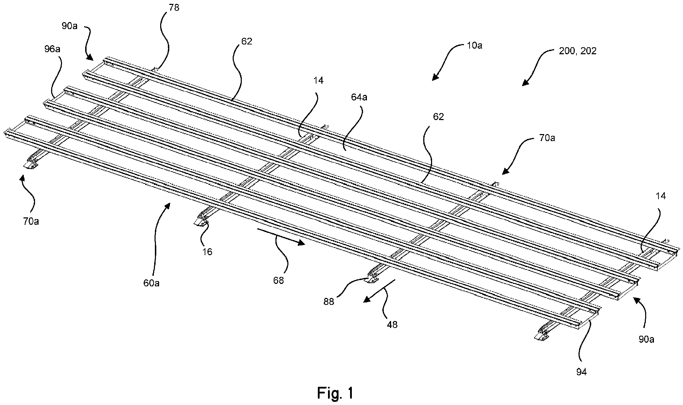

Figur 1 zeigt eine schematische Darstellung eines ersten Ausführungsbeispiels einer Tragstruktur 10a. Des Weiteren illustriert Figur 1 ein Beispiel eines Montageverfahrens 200, bei welchem ein Tragstrukturmodul 60a vormontiert wird 202.

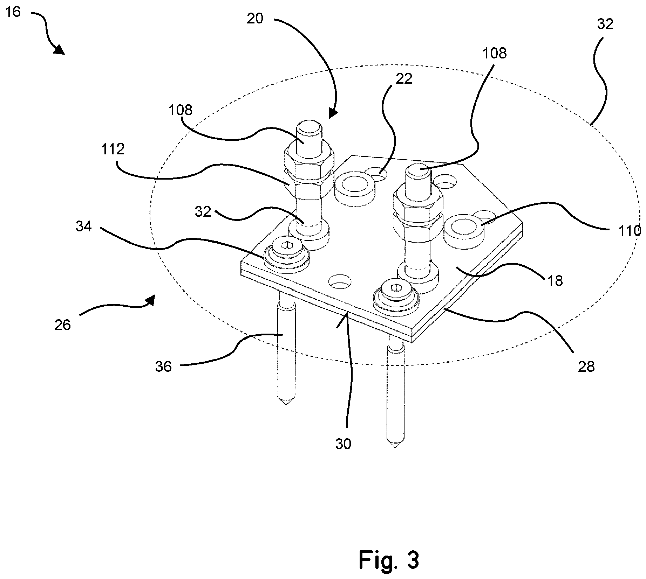

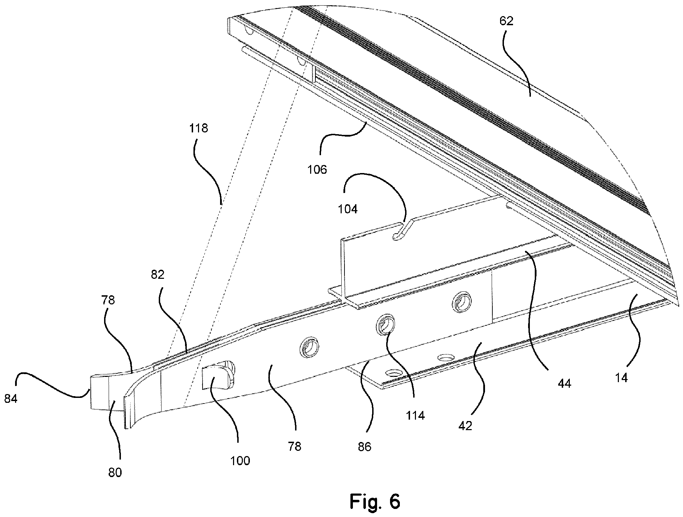

Die in Figur 1 gezeigte Tragstruktur 10a weist beispielhaft vier Tragschienen 14 auf. Jeder der genannten vier Tragschienen 14 ist dabei beispielhaft ein Stützfuß 16 zugeordnet. Ein Ausführungsbeispiel des Stützfußes 16 wird im Zusammenhang mit Figur 3 näher beschrieben. Jeder Stützfuß 16 weist eine höhenverstellbare Aufnahmevorrichtung 20 auf, in welche eine diesem Stützfuß 16 zugeordnete Tragschiene 14 der vier genannten Tragschienen 14 aufgenommen ist. Beispielhaft ist eine Detailansicht einer auf die vorbeschriebene Weise aufgenommene Tragschiene 14 in einem Stützfuß 16 in Figur 6 gezeigt.

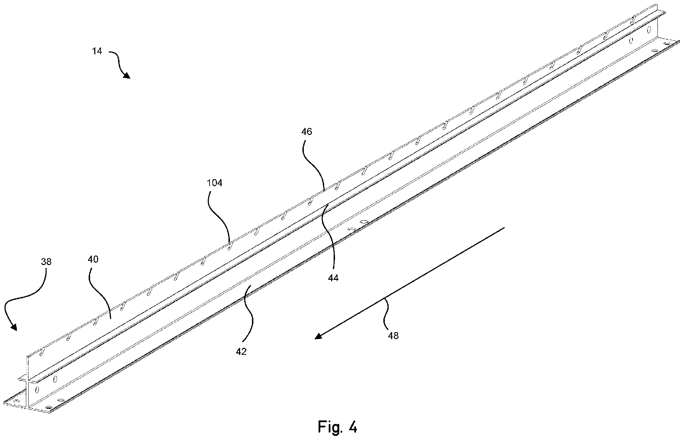

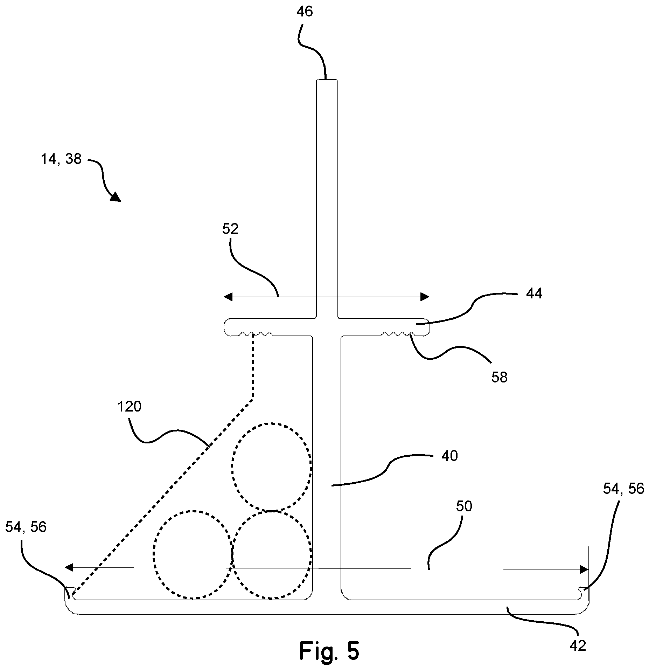

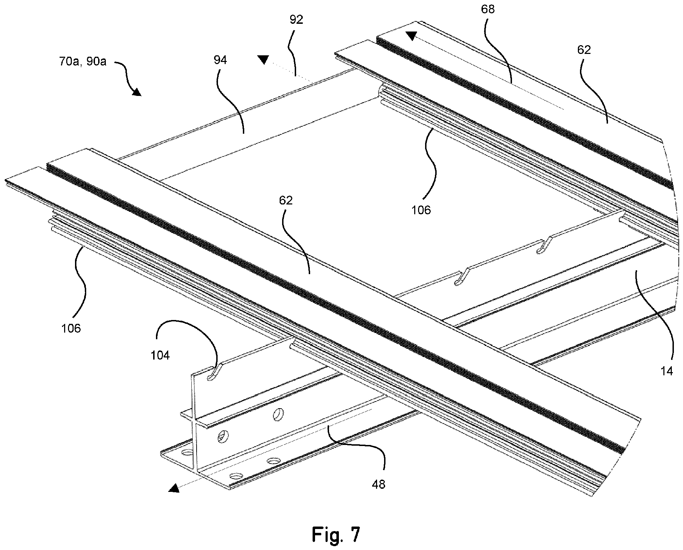

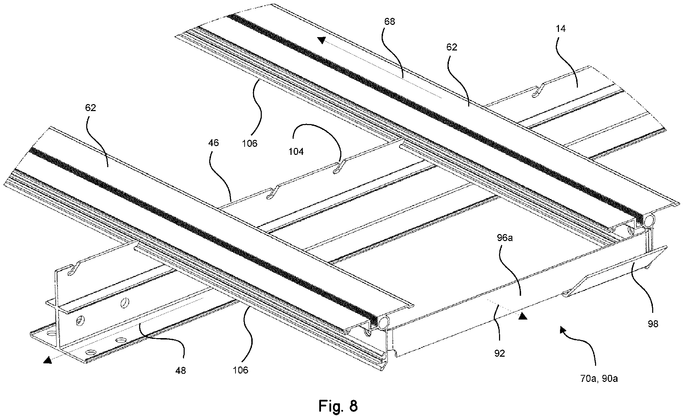

Als Tragstruktur 10a ist im ersten Ausführungsbeispiel ein Tragstrukturmodul 60a vorgesehen. Dieses wird vormontiert 202, indem die genannten vier Tragschienen 14 im Wesentlichen parallel zueinander beabstandet angeordnet werden. Ein Ausführungsbeispiel einer Tragschiene 14 der vier Tragschienen 14 wird beispielhaft im Zusammenhang mit den Figuren 4 und 5 näher beschrieben. In dieser Anordnung werden die genannten vier Tragschienen 14 sodann mittels mehrerer Querverbindungsschienen 62 miteinander verbunden. Zu diesem Zwecke werden die mehreren Querverbindungsschienen 62 vorliegend derart relativ zu den vier Tragschienen 14 angeordnet, dass sich eine Längserstreckungsrichtung 68 jeder der mehreren Querverbindungsschienen 62 im Wesentlichen senkrecht zu einer Längserstreckungsrichtung 48 jeder der vier Tragschienen 14 erstreckt. Zum Zwecke einer Erstellung einer Verbindung zwischen den vier Tragschienen 14 und den mehreren Querverbindungsschienen 62 ist im Zusammenhang mit dem vorliegenden Ausführungsbeispiel vorgesehen, dass jede der genannten mehreren Querverbindungsschienen 62 durch ein Profilstab gebildet ist. Dieser Profilstab weist beispielhaft jeweils ein solches Profil auf, wie dies im Zusammenhang mit dem im Dokument DE 20 2016 100 046 U1 als "Wärmetauscher" bezeichneten Profilstab beschrieben ist. In einer besonderen Ausführungsvariante kann im vorliegenden Zusammenhang von dem im vorgenannten Dokument beschriebenen "Fluidkanal" zum Zwecke einer Leitung von Kühlmittel abgesehen werden. Beispielhaft weisen die mehreren Querverbindungsschienen 62 zum Zwecke einer Verbindung mit den vier Tragschienen 14 einen Tragfuß 106 der in dem vorgenannten Dokument auf dieselbe Weise bezeichneten und in diesem Zusammenhang näher beschriebenen Art auf. Des Weiteren sind beispielhaft Halteausnehmungen 104 an den vier genannten Tragschienen 14 vorgesehen, in welche ein Tragfuß 106 der mehreren Querverbindungsschienen 62 zum Zwecke der Verbindung eingreift. Bei den Halteausnehmungen 104 handelt es sich insbesondere um Halteausnehmungen der im vorgenannten Dokument beschriebenen Art. Eine Detailansicht einer Verbindung zwischen einer Tragschiene 14 und einer Querverbindungsschiene 62 ist schematisch in Figur 7 oder Figur 8 dargestellt.

Vorliegend spannen die genannten mehreren Querverbindungsschienen 62 in einem mit den vier Tragschienen 14 verbundenen Zustand eine Aufnahmeebene 64a des Tragstrukturmoduls 60a für wenigstens ein Photovoltaikmodul 12 auf. Diese Aufnahmeebene 64a ist beispielhaft durch voneinander beabstandet angeordnete Aufnahmeflächen der mehreren Querverbindungsschienen 62 aufgespannt.

Ferner weist das in Figur 1 gezeigte Ausführungsbeispiel des Tragstrukturmoduls 60a eine Positioniervorrichtung 70a auf. Mittels der Positioniervorrichtung 70a sind mehrere Tragstrukturmodule 60a relativ zueinander anordenbar.

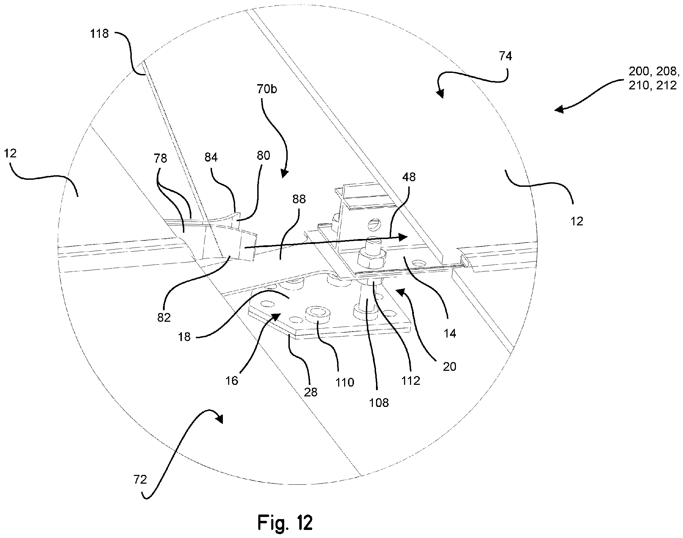

Die Positioniervorrichtung 70a sieht beispielhaft mehrere Rampen 88 vor. Jeweils eine der mehreren Rampen 88 ist vorliegend gemeinsam mit einem der Stützfüße 16 an einem Endabschnitt der Tragschienen 14 angeordnet. Eine Funktionsweise der Rampe wird im Zusammenhang mit der folgenden Figur 12 näher beschrieben.

Des Weiteren weist die Positioniervorrichtung 70a eine Vorrichtung zweiter Art 90a auf. Mittels der Vorrichtung zweiter Art 90a sind unmittelbar benachbarte Tragstrukturmodule 60a in einem vorbestimmten seitlichen Abstand 92 relativ zueinander positionierbar. Ein Ausführungsbeispiel der Vorrichtung zweiter Art 90a wird im Zusammenhang mit den Figuren 7 und 8 näher beschrieben.

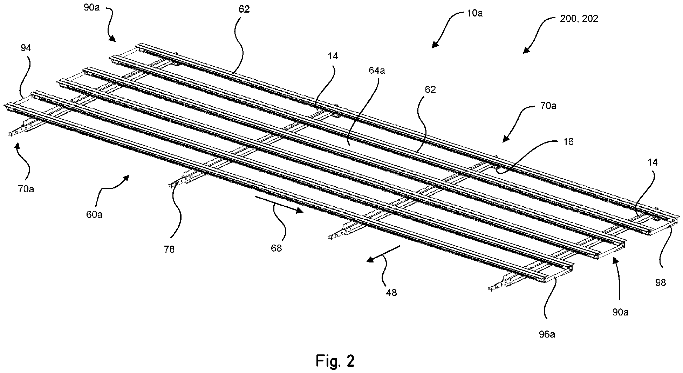

Figur 2 zeigt das im Zusammenhang mit Figur 1 beschriebene Ausführungsbeispiel der als Tragstrukturmodul 60a vorgesehenen Tragstruktur 10a in einer um 180° gedrehten Ansicht in einer schematischen Darstellung.

In dieser gedrehten Ansicht ist eine Vorrichtung erster Art 78 der Positioniervorrichtung 70a gezeigt, mittels welcher Tragschienen 14 benachbarter Tragstrukturmodule 60a fluchtend relativ zueinander anordenbar sind. Dabei sind beispielhaft jeweils zwei Vorrichtungen erster Art 78 mit einem Endabschnitt jeweils einer der vier Tragschienen 14 verbunden. An diesen besagten Endabschnitten ist beispielhaft kein Stützfuß 16 vorgesehen. Eine schematische Detailansicht eines Ausführungsbeispiels der Vorrichtung erster Art 78 in einem mit einer Tragschiene 14 verbundenen Zustand wird später im Zusammenhang mit Figur 6 näher erläutert.

In Figur 3 ist eine perspektivische Ansicht eines Ausführungsbeispiels eines Stützfußes 16 gezeigt. Der gezeigte Stützfuß 16 weist eine Grundplatte 18 auf. Des Weiteren weist der Stützfuß 16 die im Zusammenhang mit Figur 1 bereits genannte höhenverstellbare Aufnahmevorrichtung 20 auf. Diese höhenverstellbare Aufnahmevorrichtung 20 ist vorliegend auf der genannten Grundplatte 18 angeordnet.

Als höhenverstellbare Aufnahmevorrichtung 20 sind vorliegend beispielhaft zwei Gewindestangen 108 vorgesehen. Diese zwei Gewindestangen 108 sind beispielhaft in jeweils einer von zwei an der Grundplatte 18 vorgesehenen Gewindebuchsen 110 aufgenommen. Des Weiteren sind auf jeder der genannten zwei Gewindestangen 108 zwei Muttern 112 aufgenommen. Einen erste der zwei Muttern 112 ist dazu vorgesehen, eine dem zugehörigen Stützfuß 16 zugeordnete Tragschiene 14 aufzunehmen. Diese Tragschiene 14 kann sodann mittels Verdrehen der Mutter 112 entlang der zugehörigen Gewindestange 108 relativ zu der Grundplatte 18 ausgerichtet werden. Damit ist die Tragschiene 14 höhenverstellbar aufgenommen. Eine zweite der zwei genannten Muttern 112 dient vorliegend beispielhaft einer Sicherung der aufgenommenen Tragschiene 14. Diese zweite Mutter 112 hat daher die Funktion einer Kontermutter.

Des Weiteren weist das vorliegend beschriebene Ausführungsbeispiel des Stützfußes 16 eine Befestigungsvorrichtung 22 auf. Mittels der Befestigungsvorrichtung 22 ist der gezeigte Stützfuß 16 mit einem nicht näher dargestellten Untergrund 24 verbindbar. Als Untergrund 24 kann beispielsweise eine Dachkonstruktion oder ein aufgehendes Bauteil vorgesehen sein. Im vorliegenden Ausführungsbeispiel sind als Befestigungsvorrichtung 22 Ausnehmungen in der Grundplatte 18 vorgesehen. Daher ist die höhenverstellbare Aufnahmevorrichtung 20 vorliegend separat von der Befestigungsvorrichtung 22 ausgebildet. Beispielhaft ist in Figur 3 gezeigt, dass in zwei Ausnehmungen der Befestigungsvorrichtung 22 Befestigungsmittel 36 angeordnet sind. Bei dem Befestigungsmittel 36 kann es sich beispielsweise um Nägel oder Schrauben handeln. Vorliegend sind Schrauben in der Befestigungsvorrichtung 22 aufgenommen, um den Stützfuß 16 mit dem Untergrund 24 zu verbinden.

Das in Figur 3 gezeigt Ausführungsbeispiel des Stützfußes 16 sieht des Weiteren drei Abdichtungsmöglichkeiten vor.

Eine erste Abdichtungsmöglichkeit ist durch eine Materialschicht erster Art 28 der Abdichtvorrichtung 26 gebildet. Diese Materialschicht erster Art 28 ist an der Unterseite 30 der Grundplatte 18 des Stützfußes 16 angeordnet. Als Materialschicht erster Art 28 ist vorliegend beispielhaft ein Nageldichtband vorgesehen. Mittels des Nageldichtbands können Durchdringungsstellen eines Befestigungsmittels 36 abgedichtet werden. So kann verhindert werden, dass Nässe von außen in Richtung des Untergrunds 24 eindringt.

Des Weiteren weist die Abdichtvorrichtung 26 als zweite Abdichtungsmöglichkeit eine Materialschicht zweiter Art 32 auf. Mittels der Materialschicht zweiter Art 32 ist zumindest die Befestigungsvorrichtung 22 überdeckbar. Beispielhaft wird die Materialschicht zweiter Art 32 von der höhenverstellbaren Aufnahmevorrichtung 20 durchdrungen und durch diese aufgenommen. Vorliegend ist diese Materialschicht zweiter Art 32 als kreisrunde Folie ausgebildet, welche die Grundplatte 18 des Stützfußes 16 vollständig überdeckt. Dabei kann als Materialschicht zweiter Art 32 eine Folie vorgesehen sein, welche eine einseitige Klebeschicht aufweist. Die Materialschicht zweiter Art 32 kann dadurch mit der Grundplatte 18 und/oder mit wenigstens einem Teil des Untergrunds 24 dichtend verklebt werden. Alternativ kann es sich bei der Materialschicht zweiter Art 32 um eine mit einer Dachbahn kompatible Schweißbahn handeln. Beispielsweise kann diesbezüglich ein Bitumenmaterial oder ein Kunststoffmaterial vorgesehen sein. So kann mittels der Materialschicht zweiter Art 32 eine unterhalb der Tragschiene 14 angeordnete wasserableitende Anordnung vorgesehen werde, welche verhindert, dass Wasser von oben her zu der Grundplatte 18 gelangt. Insbesondere kann auf diese Weise Kondenswasser, welches durch eine Kühlung der Photovoltaikmodule 12 auf eine Temperatur unterhalb eines Taupunkts entsteht, zuverlässig vor einem Eindringen in den Untergrund 24 abgehalten werden.

Als dritte Abdichtungsmöglichkeit weist die Abdichtvorrichtung 26 mehrere Dichtringe 34 auf. Dabei ist beispielhaft jeder der mehreren Dichtringe 34 dazu eingerichtet, ein in der Befestigungsvorrichtung 22 anordenbares Befestigungsmittel 36 entlang eines Abschnitts des Befestigungsmittels 36 zu umschließen. Der Dichtring 34 der Abdichtvorrichtung 26 ist bevorzugterweise Teil eines dem Fachmann unter dem Begriff "Spenglerschraube" oder "Dachdeckerschraube" bekannten Befestigungsmittels. Eine solche Spenglerschraube weist in der Regel neben einem Gewindeabschnitt einen glatten Schaft auf, auf welchem eine geprägte Tellerscheibe sowie zumindest ein Dichtungsring 34 aufgesteckt sind.

Figur 4 zeigt eine perspektivische Darstellung eines Ausführungsbeispiels der Tragschiene 14. Hierbei ist als Tragschiene 14 ein Profilstab vorgesehen, dessen Profil 38 im Folgenden im Zusammenhang mit Figur 5 näher beschrieben wird.

Eine Oberkante 46 der Tragschiene 14 weist die vorgenannten Halteausnehmungen 104 zum Zwecke einer Aufnahme der Tragfüße 106 der genannten Querverbindungsschienen 62 auf. Diese Oberkante 46 der Tragschiene 14 weist des Weiteren im vorliegenden Zusammenhang relativ zur Längserstreckungsrichtung 48 der Tragschiene 14 einen abgewinkelten Verlauf auf. Auf diese Weise wird eine Höhe der Tragschiene 14 entlang wenigstens eines Abschnitts entlang der Längserstreckungsrichtung 48 reduziert. In einer alternativen Ausführungsvariante kann die Oberkante 46 der Tragschiene 14 mehrere Abschnitte mit einem abgewinkelten Verlauf aufweisen. Ein solcher Verlauf kann beispielsweise mittels Versprüngen an einem Ende eines jeweiligen abgewinkelten Verlaufs gebildet sein. So können mehrere Photovoltaikmodule 12 entlang der Längserstreckungsrichtung 48 aufgenommen werden, welche sich teilweise überlappen.

Die Tragschiene 14 ist vorliegend durch einen Profilstab gebildet, dessen Profil 38 beispielhaft in Figur 5 gezeigt ist. Figur 5 zeigt dabei eine Querschnittsebene, welche sich im Wesentlichen senkrecht zu der Längserstreckung 48 der Tragschiene 14 erstreckt.

Das gezeigte Beispiel des Profils 38 weist einen ersten Steg 40 auf. Eine Oberkante 46 des ersten Stegs 40 bildet die vorhergehend genannte Oberkante 46 der Tragschiene 14. Des Weiteren sind ein zweiter Steg 42 und ein dritter Steg 44 vorgesehen. Der zweite Steg 42 und der dritte Steg 44 kreuzen jeweils den ersten Steg 40 im Wesentlichen senkrecht. Dabei ist der zweite Steg 42 einer von der Oberkante 46 abgewandten Seite des ersten Stegs 40 angeordnet. Vom zweite Steg 42 beabstandet ist der dritte Steg 44 angeordnet. Vorliegend ist dabei eine Breite 50 des zweiten Stegs 42 ist größer als eine Breite 52 des dritten Stegs 44. Die genannte Breite 50 des zweiten Stegs 42 sowie die genannte Breite 52 des dritten Stegs 44 bemessen jeweils in einer Richtung im Wesentlichen senkrecht zu der Längserstreckungsrichtung 48 der Tragschiene 14.

Des Weiteren weist der zweite Steg 42 des vorliegend beschriebenen Ausführungsbeispiels des Profils 38 an beiden freien Enden 54 jeweils einen abgewinkelten Fortsatz 56 auf. Auf diese Weise kann eine Stabilität der Tragschiene 14 erhöht werden.

Ferner sind an dem dritten Steg 44 mehrere Nuten 58 vorgesehen. Diese Nuten 58 erstrecken sich jeweils entlang der Längserstreckungsrichtung 48 der Tragschiene 14. Beispielhaft sind die genannten Nuten 58 an einer dem zweiten Steg 42 zugewandten Seite des dritten Stegs 44 angeordnet. Diese Nuten 58 ermöglichen eine einfache Befestigung eines Klemmteils 120. Das genannte Klemmteil 120 ist schematisch gestrichelt dargestellt. Die genannten Nuten 58 sowie der Fortsatz 56 am freien Ende 54 des zweiten Stegs 42 sind vorliegend beispielhaft Teil einer Rastverbindung, mittels welcher das genannte Klemmteil 120 mit dem Profil 38 verbindbar ist. Als Klemmteil 120 ist beispielhaft ein abgekantetes Blech vorgesehen, welches zunächst zwischen den zweiten Steg 42 und den dritten Steg 44 eingelegt wird. Durch ein Verspannen des Klemmteils 120 mithilfe einer der Nuten 58 können die beispielhaft gestrichelt dargestellten, auf dem zweiten Steg 42 abgelegten Leitungen gegen Beschädigungen und Herunterfallen gesichert werden.

Figur 6 zeigt schematisch ein Endabschnitt einer im Zusammenhang mit den Figuren 4 und 5 beispielhaft beschriebenen Tragschiene 14. Zudem sind in Figur 6 die entlang der Oberkante 46 vorgesehenen Halteausnehmungen 104 beispielhaft gezeigt.

Mit dem vorgenannten Endabschnitt der gezeigten Tragschiene 14 sind vorliegend zwei Vorrichtungen erster Art 78 der Positioniervorrichtung 70a mittels einer Befestigungseinrichtung 114 verbunden. Die zwei genannten Vorrichtungen erster Art 78 sind vorliegend baugleich ausgebildet. Der Übersichtlichkeit halber wird daher im Folgenden eine der zwei Vorrichtungen erster Art 78 näher beschrieben.

Die Vorrichtung erster Art 78 weist einen Justierabschnitt 86 auf. Der Justierabschnitt 86 ist dazu ausgebildet, formschlüssig in einen durch den zweiten Steg 42 und dritten Steg 44 begrenzten Zwischenraum eines jeden Profils 38 zweier fluchtend miteinander anzuordnenden Tragschienen 14 einzugreifen. Des Weiteren ist die Vorrichtung erster Art 78 mit dem ersten Steg 40 verbunden. Hierzu ist im vorliegenden Ausführungsbeispiel die den ersten Steg 40 sowie den Justierabschnitt 86 durchdringende Befestigungseinrichtung 114 vorgesehen. Diese Befestigungseinrichtung 114 kann beispielsweise eine Schraubverbindung oder eine Nietverbindung sein. Mittels der Befestigungsvorrichtung 114 sind zwei fluchtend miteinander anzuordnenden Tragschienen 14 miteinander verbindbar. Dies bietet eine einfache Möglichkeit zum Zwecke einer Verbindung von unmittelbar benachbarten Tragstrukturmodulen.

Des Weiteren weist das vorliegend beschriebene Ausführungsbeispiel der Vorrichtung erster Art 78 neben dem Justierabschnitt 86 ein Leitabschnitt 82 auf. Entlang des Leitabschnitts 82 ist die Vorrichtung erster Art 78 derart ausgebildet, dass sich diese in Richtung eines freien Endes 84 derselben hin verjüngt. Des Weiteren ist zum Zwecke einer fluchtenden Anordnung der Tragschiene 14 mit einer weiteren Tragschiene 14 eine gekrümmte Leitfläche 80 an der Vorrichtung erster Art 78 vorgesehen. Dies ermöglicht es, eine mechanische Führungsmöglichkeit bereitzustellen, bei welcher nur wenig manuelles Zutun erfoderlich ist, um eine fluchtende Anordnung zu erreichen.

In einer bevorzugten Ausführungsform der Vorrichtung erster Art 78 weist diese ein Anschlagteil 100 auf. Mittels des Anschlagteils 100 kann beispielsweise ein gestrichelt dargestelltes Anschlagmittel 118 einer nicht näher dargestellten Hebevorrichtung an der Vorrichtung erster Art 78 angeschlagen werden. So kann beispielsweise eine Kranschlaufe an der Vorrichtung erster Art 78 eingehängt werden. Auf diese Weise kann sodann ein vormontiertes 202 Tragstrukturmodul 60a, 60b zuverlässig und sicher zum Zwecke einer Endmontage angehoben werden. Dieses Anschlagteil 100 ist vorzugsweise einteilig mit der Vorrichtung erster Art 78 ausgebildet. Beispielsweise kann es sich bei dem Anschlagteil 100 um einen ausgestanzten Abschnitt der Vorrichtung erster Art 78 oder um einen an der Vorrichtung erster Art 78 angebrachten Bolzen handeln.

Figur 7 zeigt ein Ausführungsbeispiel eines Leitstegs 94 der Vorrichtung zweiter Art 90a der Positioniervorrichtung 70a in einer schematischen Darstellung. Dieser Leitsteg 94 ist beispielhaft zwischen zwei von mehreren Querverbindungsschienen 62 des im Zusammenhang mit den Figuren 1 und 2 beschriebenen Tragstrukturmoduls 60a befestigt. In einer einfachsten Ausführungsvariante handelt es sich bei dem Leitsteg 94 um einen rechteckigen Blechabschnitt, welcher dazu eingerichtet ist, in das in Zusammenhang mit Figur 8 näher beschriebene Aufnahmeteil 96a einzugreifen.

Figur 8 zeigt ein Ausführungsbeispiel eines Aufnahmeteils 96a der Vorrichtung zweiter Art 90a in einer schematischen Darstellung. Beispielhaft ist dieses Aufnahmeteil 96a auf einer von dem Leitsteg 94 abgewandten Seite der im Zusammenhang mit Figur 7 genannten Querverbindungsschienen 62 angeordnet und dort mit diesen verbunden. Im vorliegenden Ausführungsbeispiel weist das Aufnahmeteil 96a entlang eines vorbestimmten Abschnitts eine Abkantung 98 auf. Mittels dieser Abkantung 98 ist der beispielhaft in Figur 7 gezeigt Leitsteg 94 verschiebbar aufnehmbar. Zu diesem Zweck ist die Abkantung 98 kürzer als der Leitsteg 94 gebildet. Dies ermöglicht es, unmittelbar benachbart anzuordnende Tragstrukturmodule 60a unter Einhaltung eines vorbestimmten seitlichen Abstands 92 in einer Richtung im Wesentlichen senkrecht zu der Längserstreckungsrichtung 48 von Tragschienen 14 und damit in Richtung der Längserstreckungsrichtung 68 der mehreren Querverbindungsschienen 62 anzuordnen.

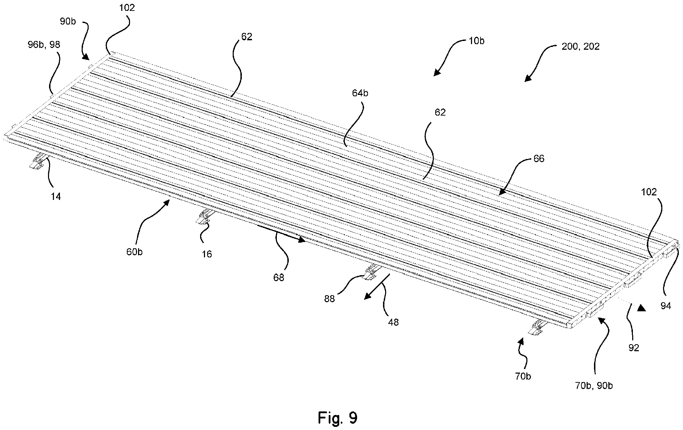

Figur 9 zeigt ein zweites Ausführungsbeispiel einer durch ein Tragstrukturmodul 60b gebildeten Tragstruktur 10b. Dieses zweite Ausführungsbeispiel der Tragstruktur 10b unterscheidet sich von dem im Zusammenhang mit Figuren 1 und 2 beschriebenen ersten Ausführungsbeispiel der Tragstruktur 10a dadurch, dass eine größere Anzahl an Querverbindungsschienen 62 der im Zusammenhang mit dem ersten Ausführungsbeispiel der Tragstruktur 10a beschriebenen Art vorgesehen sind. Auf diese Weise bilden die mehreren Querverbindungsschienen 62 des zweiten Ausführungsbeispiels der Tragstruktur 10b einen Teil einer Wärmeübertrageranordnung 66. Als Teil der Wärmeübertrageranordnung 66 ist vorliegend vorgesehen, dass die mehreren Querverbindungsschienen 62 der Tragstruktur 10b eine Aufnahmeebene 64b ausbilden. Im Unterschied zu der im Zusammenhang mit Figuren 1 und 2 beschriebenen Aufnahmeebene 64a werden vorliegend die mehreren Querverbindungsschienen 62 derart vormontiert 202, dass diese eine im Wesentlichen zusammenhängende Kontaktfläche zum Zwecke einer thermischen Kontaktierung mit einem auf dieser Aufnahmeebene 64b aufnehmbaren Photovoltaikmodul 12 bildet. Hierzu sind die mehreren Querverbindungsschienen 62 im vorliegend beschriebenen Ausführungsbeispiel der Tragstruktur 10b mit kleinstmöglichem Abstand, bevorzugt in gegenseitigem Kontakt, unmittelbar nebeneinander angeordnet.

Als Teil der Wärmeübertrageranordnung 66 ist es erforderlich, dass Fluidkanäle der mehreren Querverbindungsschienen 62 miteinander oder mit Fluidkanälen von Querverbindungsschienen 62 weiterer Tragstrukturmodule 60b derselben Bauart miteinander verbunden werden. Hierzu sieht das zweite Ausführungsbeispiel der als Tragstrukturmodul 60b vorgesehenen Tragstruktur 10b an den Endabschnitten der mehreren Querverbindungsschienen 62 jeweils ein Rohrverbinder 102 vor. Ein solcher Rohrverbinder 102 ist unter derselben Bezeichnung beispielhaft im Dokument DE 20 2016 100 046 U1 beschrieben. Vorzugsweise handelt es sich bei dem vorliegenden Rohrverbinder 102 um einen der in dem vorgenannten Dokument beschriebenen Art.

Daher unterscheidet sich das zweite Ausführungsbeispiel des Tragstrukturmoduls 60b von dem ersten Ausführungsbeispiel des Tragstrukturmoduls 60a des Weiteren durch eine konkrete Anordnung und Ausgestaltung der Vorrichtung zweiter Art 90b. Die Leitstege 94 der Vorrichtung zweiter Art 90b sind im vorliegend beschriebenen Ausführungsbeispiel nicht unmittelbar an den Querverbindungsschienen 62, sondern stattdessen an einem Rohrverbinder 102 angeordnet. Ebenso ist die Abkantung 98 des Aufnahmeteils 96b der Vorrichtung zweiter Art 90b nicht unmittelbar an den Querverbindungsschienen 62, sondern stattdessen an einem Rohrverbinder 102 angeordnet.

Im Übrigen ist das in Zusammenhang mit Figur 9 beschriebene zweite Ausführungsbeispiel baugleich mit dem im Zusammenhang mit den Figuren 1 und 2 beschriebenen ersten Ausführungsbeispiel ausgebildet.

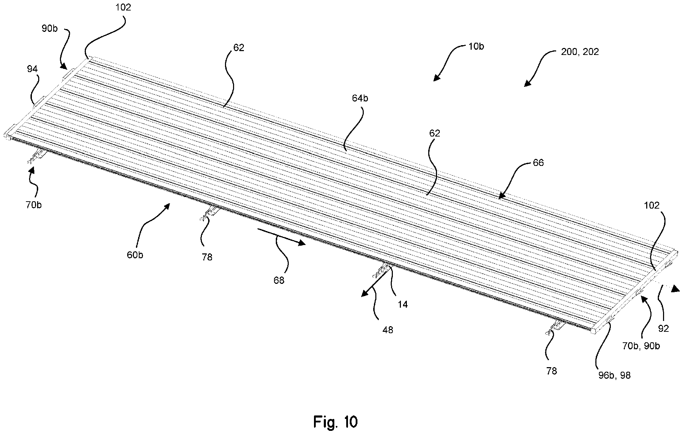

Figur 10 zeigt eine um 180° in einer horizontalen Ebene gedrehte schematische Ansicht des in Figur 9 gezeigten zweiten Ausführungsbeispiels der als Tragstrukturmodul 60b ausgebildeten Tragstruktur 10b. In dieser Ansicht sind die Abkantungen 98 des Aufnahmeteils 96b der Vorrichtung zweiter Art 90b vordergründig dargestellt, welche beispielhaft mit dem Rohrverbinder 102 verbunden sind.

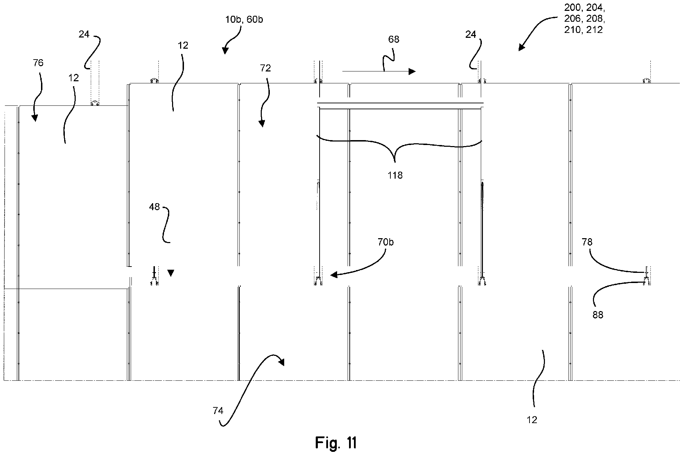

Figur 11 illustriert ein Beispiel eines Montageverfahrens 200, bei welchem mehrere Tragstrukturmodule 72, 74, 76 relativ zueinander angeordnet werden 208. Die genannten mehreren Tragstrukturmodulen 72, 74, 76 sind dabei beispielhaft auf die im Zusammenhang mit Figuren 9 und 10 beschriebene Weise vormontiert 202. In einer alternativen Ausführungsform können stattdessen als die mehreren Tragstrukturmodule 72, 74, 76 solche Tragstrukturmodule vorgesehen sein, welche auf die im Zusammenhang mit den Figuren 1 und 2 beschriebene Weise vormontiert 202 werden.

Als Untergrund 24 ist vorliegend eine Holzdachkonstruktion mit Sparren 24 vorgesehen, auf welchen beispielhaft eine nicht näher dargestellte Unterspannbahn angeordnet ist. Des Weiteren sieht das vorliegend beschriebene Beispiel des Montageverfahrens 200 vor, dass die Tragstrukturmodule 72, 74, 76 mithilfe der höhenverstellbaren Aufnahmevorrichtungen 20 von Stützfüßen 16 an die Begebenheiten des Untergrunds 24 angepasst werden 204. Auf diese Wiese werden Unebenheiten des Untergrunds 24 ausgeglichen. Dadurch werden die beispielhaft gezeigten Tragstrukturmodule 72, 74, 76 möglichst gleichmäßig mit allen vorgesehenen Stützfüßen 16 auf den Sparren 24 abgestützt 206. Ein Teil der Stützfüße 16 wird daraufhin mittels Befestigungsmitteln 36 der oben beschrieben Art mit dem Sparren 24 verbunden 214. Mittels der Abdichtvorrichtung 26 der zuvor beschriebenen Art werden durch die Befestigungsmittel 36 bedingte Durchdringungsstellen abgedichtet 216.

Beispielhaft sind auf jedem der mehreren Tragstrukturmodule 72, 74, 76 jeweils fünf Photovoltaikmodule 12 auf einer durch die Wärmeübertrageranordnung 66 gebildeten Aufnahmeebene 64b angeordnet. Diese Gesamtanordnung aus einem der mehreren Tragstrukturmodule 72, 74, 76 mit den darauf angeordneten Photovoltaikmodulen 12 werden im Beispiel des vorliegend beschriebenen Montageverfahrens 200 vormontiert 202.

In Figur 11 ist bereits beispielhaft ein Teil der mehreren Tragstrukturmodule 74, 76 auf dem Untergrund 24 angeordnet. Dabei illustriert Figur 11 das ein erstes Tragstrukturmodul 72 der mehreren Tragstrukturmodule 72, 74, 76 mittels der vorbeschriebenen Positioniervorrichtung 70b relativ zu den bereits auf dem Untergrund 24 angeordneten Tragstrukturmodulen 74, 76 angeordnet wird 208. Dabei ist vorgesehen, dass das vormontierte 202 erste Tragstrukturmodul 72 beispielhaft mittels einer nicht näher dargestellten Hebevorrichtung relativ zu den übrigen gezeigten Tragstrukturmodulen 74, 76 angeordnet wird 208. Hierzu ist das genannte erste Tragstrukturmodul 72 mittels Anschlagmittel 118 beispielhaft mit einem Kran verbunden. Mittels der Anschlagmittel 118 wird das gezeigte erste Tragstrukturmodul 72 angehoben und zum Zwecke einer Endmontage auf die Sparren 24 verbracht.

Das vorliegend beschriebene Beispiel des Montageverfahrens 200 sieht zunächst vor, dass mittels der Vorrichtung zweiter Art 90b der Positioniervorrichtung 70b das erste Tragstrukturmodul 72 der mehreren Tragstrukturmodule 72, 74, 76 in einem vorbestimmten seitlichen Abstand 92 zu einem anderen Tragstrukturmodul 76 der mehreren vormontierten 202 Tragstrukturmodule 72, 74, 76 angeordnet wird 212. Zu diesem Zweck werden die an dem Rohrverbinder 102 des ersten Tragstrukturmoduls 72 angeordneten Leitstege 94 beispielhaft mit den an dem Rohrverbinder 102 des anderen Tragstrukturmoduls 76 angeordneten Aufnahmeteile 96b in Eingriff gebracht. Dies erfolgt dadurch, dass die genannten Leitstege 94 jeweils zugeordnete Abkantungen 98 der genannten Aufnahmeteile 96b abgelegt werden. Dabei sind die genannten Leitstege 94 des ersten Tragstrukturmoduls 72 in den Aufnahmeteilen 96b des anderen Tragstrukturmoduls 76 bewegbar in Richtung der Längserstreckungsrichtung 48 von Tragschienen 14 der mehreren Tragstrukturmodule 72, 74, 76 aufgenommen.

Nachdem die Leitstege 94 in den jeweils zugeordneten Aufnahmeteilen 96b aufgenommen sind, sieht das vorliegend beschriebene Beispiel des Montageverfahrens 200 vor, dass die Anschlagmittel 118 von einer einem weiteren Tragstrukturmodul 74 zugewandten Seite des ersten Tragstrukturmoduls 72 entfernt werden. Hierzu ist vorliegend vorgesehen, dass das erste Tragstrukturmodul 72 beabstandet zu dem genannten weiteren Tragstrukturmodul 74 auf einer Rampe 88 abgelegt wird. Diese Rampe 88 ist Teil der Positioniervorrichtung 70b des genannten weiteren Tragstrukturmoduls 74. Beispielhaft ist diese Rampe 88 mit einer Tragschiene 14 des weiteren Tragstrukturmoduls 74 verbunden. Mittels dieser Rampe 88 ist eine mit einer Tragschiene 14 des ersten Tragstrukturmoduls 72 verbundene Vorrichtung erster Art 78 zum Zwecke eines Eingriffs des zugehörigen Justierabschnitts 86 in das Profil 38 der Tragschiene 14 des weiteren Tragstrukturmoduls 74 hin zu diesem Profil 38 des weiteren Tragstrukturmoduls 74 führbar.

Wie in Figur 12 beispielhaft illustriert, sieht das vorliegend beschriebene Beispiel des Montageverfahrens 200 nach dem einseitigen Entfernen der Anschlagmittel 118 weiter vor, dass jeweils eine Tragschiene 14 des ersten Tragstrukturmoduls 72 mit jeweils einer Tragschiene 14 des weiteren Tragstrukturmoduls 74 fluchtend angeordnet werden 210. Dabei werden die fluchtend miteinander anzuordnenden Tragschienen 14 mithilfe der zwei Vorrichtungen erster Art 78 der Positioniervorrichtung 70b des ersten Tragstrukturmoduls 72 in Längserstreckungsrichtung 48 der der genannten Tragschienen 14 zueinander geführt. Mittels der gekrümmten Leitflächen 80 der zwei Vorrichtungen erster Art 78 wird dabei ein seitlicher Versatz zwischen den fluchtend anzuordnenden Tragschienen 14 ausgeglichen. Mittels der Rampe 88 sowie mithilfe der Leitabschnitte 82 der Vorrichtungen erster Art 78 wird des Weiteren ein möglicher Höhenunterschied zwischen den fluchtend anzuordnenden Tragschienen 14 während eines Zusammenführens der besagten fluchtend anzuordnenden Tragschienen 14 ausgeglichen. Auf diese Weise werden die Justierabschnitte 86 der zwei genannten Vorrichtungen erster Art 78 einfach und zuverlässig durch ein Zusammenführen des ersten Tragstrukturmoduls 72 mit dem weiteren Tragstrukturmodul 74 in Längserstreckungsrichtung 48 formschlüssig in Eingriff mit dem Profil 38 einer Tragschiene 14 des weiteren Tragstrukturmoduls 74 gebracht.

Des Weiteren zeigt Figur 12 beispielhaft, dass die Tragschiene 14 des weiteren Tragstrukturmoduls 74 durch die höhenverstellbaren Aufnahmevorrichtung 20 des oben im Zusammenhang mit Figur 3 beschriebenen Stützfußes 16 aufgenommen ist. Dabei ist im gezeigten Ausführungsbeispiel neben der Tragschiene 14 die Rampe 88 durch die höhenverstellbare Aufnahmevorrichtung 20 aufgenommen.

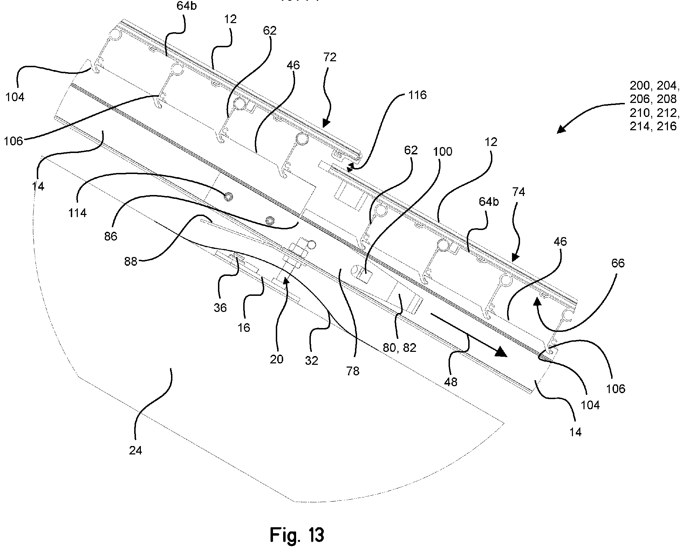

Figur 13 zeigt eine Seitenansicht auf einen Verbindungsbereich, in welchem das vorgenannte erste Tragstrukturmodul 72 mittels der Vorrichtung erster Art 78 fluchtend mit dem weiteren Tragstrukturmodul 74 angeordnet ist. Der Übersichtlichkeit halber wird bei der besagten Seitenansicht von einer Darstellung der Rohrverbinder 102 abgesehen. Mithilfe des abgewinkelten Verlaufs der Oberkanten 46 der Tragschienen 14 kann auf einfache Weise ein vordefiniertes lichtes Maß 116 zwischen sich überlappenden Photovoltaikmodulen 12 realisiert werden. Des Weiteren ist in Figur 13 beispielhaft gezeigt, dass mittels der Vorrichtung erster Art 78 die jeweils fluchtend miteinander angeordneten Tragschienen 14 des ersten Tragstrukturmoduls 72 und des weiteren Tragstrukturmoduls 74 mechanisch mittels der vorbeschriebenen Befestigungseinrichtung 114 miteinander verbunden sind. Dabei ist der Justierabschnitt 86 mit beiden der zwei gezeigten, fluchtend miteinander angeordneten Tragschienen 14 verbunden. Ferner illustriert Figur 13, dass das mit dem weiteren Tragstrukturmodul 74 verbundene erste Tragstrukturmodul 72 mittels des gemeinsamen Stützfußes 16 auf dem Untergrund 24 abgestützt wird 206. Mithilfe der höhenverstellbaren Aufnahmevorrichtung 20 und der Vorrichtungen erster Art 78 werden die Tragschienen 14 des ersten Tragstrukturmoduls 72 präzise relativ zu den Tragschienen 14 des weiteren Tragstrukturmoduls 74 angeordnet.

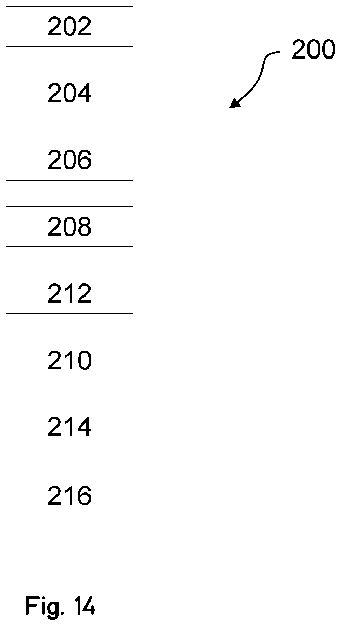

Figur 14 illustriert das im Zusammenhang mit den vorhergehenden Figuren beschriebene Beispiel des Montageverfahrens 200 in Form eines schematischen Ablaufdiagramms.

Obwohl die Erfindung im Detail im Zusammenhang mit den Figuren näher illustriert und beschrieben wurde, ist diese nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10a,b: Tragstruktur
- 12: Photovoltaikmodul
- 14: Tragschiene
- 16: Stützfuß
- 18: Grundplatte
- 20: Aufnahmevorrichtung
- 22: Befestigungsvorrichtung
- 24: Untergrund/Sparren
- 26: Abdichtvorrichtung
- 28: Materialschicht erster Art
- 30: Unterseite
- 32: Materialschicht zweiter Art
- 34: Dichtring
- 36: Befestigungsmittel
- 38: Profil
- 40: ersten Steg
- 42: zweiter Steg
- 44: dritter Steg
- 46: Oberkante
- 48: Längserstreckungsrichtung Tragschiene
- 50: Breite zweiter Steg
- 52: Breite dritter Steg
- 54: freies Ende zweiter Steg
- 56: Fortsatz
- 58: Nut
- 60a,b: Tragstrukturmodul
- 62: Querverbindungsschiene
- 64a,b: Aufnahmeebene
- 66: Wärmeübertrageranordnung
- 68: Längserstreckungsrichtung Querverbindungsschiene
- 70a,b: Positioniervorrichtung
- 72: erstes Tragstrukturmodul
- 74: weiteres Tragstrukturmodul
- 76: anderes Tragstrukturmodul
- 78: Vorrichtung erster Art
- 80: gekrümmte Leitfläche
- 82: Leitabschnitt
- 84: freies Ende Vorrichtung erster Art
- 86: Justierabschnitt
- 88: Rampe
- 90a,b: Vorrichtung zweiter Art
- 92: seitlicher Abstand
- 94: Leitsteg
- 96a,b: Aufnahmeteil
- 98: Abkantung
- 100: Anschlagteil
- 102: Rohrverbinder
- 104: Halteausnehmungen
- 106: Tragfuß
- 108: Gewindestange
- 110: Gewindebuchse
- 112: Mutter
- 114: Befestigungseinrichtung
- 116: lichtes Maß
- 118: Anschlagmittel
- 120: Klemmteil
- 200: Verfahren
- 202: Vormontieren
- 204: Anpassen
- 206: Abstützen
- 208: Anordnen mittels Positioniervorrichtung
- 210: fluchtendes Anordnen
- 212: Anordnen mit vorbestimmten seitlichen Abstand
- 214: Verbinden
- 216: Abdichten

## Patentansprüche

1. Tragstruktur (10a; 10b) für wenigstens ein Photovoltaikmodul (12) aufweisend
- mehrere Tragschienen (14);
- einen Stützfuß (16) mit einer Grundplatte (18) sowie einer höhenverstellbaren Aufnahmevorrichtung (20), welche auf der Grundplatte (18) angeordnet ist und mittels welcher wenigstens eine der mehreren Tragschienen (14) aufnehmbar ist.

2. Tragstruktur (10a; 10b) nach Anspruch 1,
**dadurch gekennzeichnet,**
**dass** der Stützfuß (16)
- eine Befestigungsvorrichtung (22) aufweist, mittels welcher der Stützfuß (16) mit einem Untergrund (24) verbindbar ist;
- eine Abdichtvorrichtung (26) aufweist, mittels welcher eine Verbindung des Stützfußes (16) mit dem Untergrund (24) abdichtbar ist.

3. Tragstruktur (10a; 10b) nach Anspruch 1,
**dadurch gekennzeichnet,**
**dass**
- die Abdichtvorrichtung (26) eine Materialschicht erster Art (28) aufweist, welche an einer Unterseite (30) der Grundplatte (18) angeordnet ist;
- die Abdichtvorrichtung (26) eine Materialschicht zweiter Art (32) aufweist, mittels welcher die Befestigungsvorrichtung (22) überdeckbar ist;
- die Abdichtvorrichtung (26) zumindest einen Dichtring (34) aufweist, mittels welchem ein in der Befestigungsvorrichtung (22) anordenbares Befestigungsmittel (36) entlang zumindest eines Abschnitts des Befestigungsmittels (36) umschließbar ist.

4. Tragstruktur (10a; 10b) nach einem der vorhergehenden Ansprüche,
**dadurch gekennzeichnet,**
**dass**
- als Tragschiene (14) ein Profilstab vorgesehen ist, dessen Profil (38) einen ersten Steg (40) aufweist;
- eine Oberkante (46) des ersten Stegs (40) relativ zu einer Längserstreckungsrichtung (48) der Tragschiene (14) einen abgewinkelten Verlauf aufweist;
- ein zweiter Steg (42) und ein dritter Steg (44) vorgesehen sind, welche den ersten Steg (40), vorzugsweise im Wesentlichen senkrecht, kreuzen;
- der zweite Steg (42) und der dritte Steg (44) voneinander beabstandet angeordnet sind;
- eine Breite (50) des zweiten Stegs (42), gemessen entlang einer Richtung im Wesentlichen senkrecht zu der Längserstreckungsrichtung (48) der Tragschiene (14), größer ist als eine Breite (52) des dritten Stegs (44);
- der zweite Steg (42) an wenigstens einem freien Ende (54) einen abgewinkelten Fortsatz (56) aufweist;
- der zweite Steg (42) von der höhenverstellbaren Aufnahmevorrichtung (20) aufgenommen ist;
- der dritte Steg (44) wenigstens eine Nut (58) aufweist, welche entlang der Längserstreckungsrichtung (48) der Tragschiene (14) angeordnet ist und welche vorzugsweise an einer dem zweiten Steg (42) zugewandten Seite des dritten Stegs (44) angeordnet ist.

5. Tragstruktur (10a; 10b) nach einem der vorhergehenden Ansprüche,
**dadurch gekennzeichnet, dass**
- zumindest ein Tragstrukturmodul (60a; 60b) vorgesehen ist, welches mehrere im Wesentlichen parallel zueinander beabstandet angeordnete Tragschienen (14) aufweist;
- das zumindest eine Tragstrukturmodul (60a; 60b) mehrere der Stützfüße (16) aufweist, in deren höhenverstellbaren Aufnahmevorrichtung (20) jeweils wenigstens eine der mehreren im Wesentlichen parallel zueinander beabstandet angeordneten Tragschienen (14) aufgenommen ist.

6. Tragstruktur (10a; 10b) nach Anspruch 5,
**dadurch gekennzeichnet, dass**
- das zumindest eine Tragstrukturmodul (60a; 60b) mehrere Querverbindungsschienen (62) aufweist, mittels welchen die mehreren Tragschienen (14) des zumindest einen Tragstrukturmoduls (60a; 60b) miteinander verbunden sind;
- die genannten mehreren Querverbindungsschienen (62) eine Aufnahmeebene (64a; 64b) für das wenigstens eine Photovoltaikmodul (12) bilden;
- die mehreren Querverbindungsschienen (62) Teil einer Wärmeübertrageranordnung (66) sind.

7. Tragstruktur (10a; 10b) nach einem der Ansprüche 5 bis 6, **dadurch gekennzeichnet, dass**
- mehrere Tragstrukturmodule (72, 74, 76) vorgesehen sind;
- eine Positioniervorrichtung (70a; 70b) vorgesehen ist, mittels welcher ein erstes Tragstrukturmodul (72) der mehreren Tragstrukturmodule (72, 74, 76) relativ zu einem weiteren Tragstrukturmodul (74) der mehreren Tragstrukturmodule (72, 74, 76) anordenbar ist.

8. Tragstruktur (10a; 10b) nach Anspruch 7,
**dadurch gekennzeichnet,**
**dass** die Positioniervorrichtung (70a; 70b) eine Vorrichtung erster Art (78) aufweist, mittels welcher eine Tragschiene (14) des ersten Tragstrukturmoduls (72) der mehreren Tragstrukturmodule (72, 74, 76) fluchtend mit einer Tragschiene (14) eines weiteren Tragstrukturmoduls (74) der mehreren Tragstrukturmodule (72, 74, 76) anordenbar ist.

9. Tragstruktur (10a; 10b) nach Anspruch 8,
**dadurch gekennzeichnet, dass**
- die Vorrichtung erster Art (78) eine gekrümmte Leitfläche (80) zum Zwecke einer fluchtenden Anordnung der Tragschiene (14) des genannten ersten Tragstrukturmoduls (72) mit der Tragschiene (14) des genannten weiteren Tragstrukturmoduls (74) aufweist;
- die Vorrichtung erster Art (78) einen Leitabschnitt (82) aufweist, welcher sich in Richtung eines freien Endes (84) dieser Vorrichtung erster Art (78) hin verjüngt;
- die Vorrichtung erster Art (78) einen Justierabschnitt (86) aufweist, mittels welchem formschlüssig in ein Teil eines Profils (38) einer Tragschiene (14) des ersten Tragstrukturmoduls (72) sowie formschlüssig in einen Teil eines Profils (38) einer Tragschiene (14) des weiteren Tragstrukturmoduls (74) eingreifbar ist;
- die Positioniervorrichtung (70a; 70b) wenigstens eine Rampe (88) aufweist, welche mit der vorgenannten Tragschiene (14) des weiteren Tragstrukturmoduls (74) verbunden ist und mittels welcher eine mit der vorgenannten Tragschiene (14) des ersten Tragstrukturmoduls (72) verbundene Vorrichtung erster Art (78) zum Zwecke eines Eingriffs des Justierabschnitts (86) in das Profil (38) der Tragschiene (14) des weiteren Tragstrukturmoduls (74) hin zu diesem Profil (38) führbar ist.

10. Tragstruktur (10a; 10b) nach einem der Ansprüche 7 bis 9, **dadurch gekennzeichnet,**
**dass** die Positioniervorrichtung (70a; 70b) eine Vorrichtung zweiter Art (90a; 90b) aufweist, mittels welcher ein erstes Tragstrukturmodul (72) der mehreren Tragstrukturmodule (72, 74, 76) in einem vorbestimmten seitlichen Abstand (92) relativ zu einem anderen Tragstrukturmodul (76) der mehreren Tragstrukturmodule (72, 74, 76) positionierbar ist.

11. Tragschiene (14) der Tragstruktur (10a; 10b) gemäß einem der vorhergehenden Ansprüche.

12. Stützfuß (16) der Tragstruktur (10a; 10b) gemäß einem der Ansprüche 1 bis 10.

13. Positioniervorrichtung (70a; 70b) der Tragstruktur (10a; 10b) gemäß einem der Ansprüche 1 bis 10.

14. Tragstrukturmodul (60a; 60b) der Tragstruktur (10a; 10b) gemäß einem der Ansprüche 1 bis 10.

15. Montageverfahren (200),
bei welchem
- das Tragstrukturmodul (60a; 60b) gemäß einem der Ansprüche 5 bis 10 vormontiert wird (202);
- das vormontierte (202) Tragstrukturmodul (60a; 60b) mithilfe von höhenverstellbaren Aufnahmevorrichtungen (20) an Begebenheiten eines Untergrunds (24) angepasst wird (204) und das vormontierte (202) Tragstrukturmodul (60a; 60b) auf diese Weise auf diesem Untergrund (24) abgestützt wird (206).
